(19) Europäisches Patentamt
European Patent Office
Office européen des brevets

(11) **EP 4 661 480 A1**

(12) **EUROPEAN PATENT APPLICATION**
published in accordance with Art. 153(4) EPC

(43) Date of publication:
**10.12.2025  Bulletin 2025/50**

(21) Application number: **24763234.2**

(22) Date of filing: **29.02.2024**

(51) International Patent Classification (IPC):
**H04W 24/10** (2009.01)    **H04W 72/04** (2023.01)

(52) Cooperative Patent Classification (CPC):
**H04W 24/10; H04W 72/04; H04W 72/0446;
H04W 72/232**

(86) International application number:
**PCT/CN2024/079471**

(87) International publication number:
**WO 2024/179554 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2023  CN 202310244980**

(71) Applicant: **Huawei Technologies Co., Ltd.
Shenzhen, Guangdong 518129 (CN)**

(72) Inventors:
• **TANG, Zhuqing
Shenzhen, Guangdong 518129 (CN)**
• **DU, Rui
Shenzhen, Guangdong 518129 (CN)**
• **NAREN, Gerile
Shenzhen, Guangdong 518129 (CN)**
• **HU, Mengshi
Shenzhen, Guangdong 518129 (CN)**
• **HAN, Xiao
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND COMMUNICATION APPARATUS**

(57)    This application provides a communication method and a communication apparatus. This application is applied to a wireless local area network system that supports a next-generation Wi-Fi protocol of IEEE 802.11ax (for example, 802.11bf, 802.11be, Wi-Fi 8, EHT, UHR, or another 802.11 series protocol), and may be further applied to a UWB-based wireless personal area network system and a sensing system. The method includes: An AP determines a first communication frame, where the first communication frame includes first information, and the first information indicates N candidate time periods for sensing measurement; and the AP sends the first communication frame to a STA. This can improve efficiency of sensing measurement setup and improve resource utilization.

FIG. 2

## Description

This application claims priority to Chinese Patent Application No. 202310244980.9, filed with the China National Intellectual Property Administration on March 1, 2023 and entitled "COMMUNICATION METHOD AND COMMUNICATION APPARATUS", which is incorporated herein by reference in its entirety.

## TECHNICAL FIELD

This application relates to the communication field, and more specifically, to a communication method and a communication apparatus.

## BACKGROUND

Wireless local area network (wireless local area network, WLAN) sensing is a technology for sensing a target by using a WLAN radio signal. A communication device may determine a characteristic of a predetermined target (for example, a device, an object, an animal, or a person) based on radio measurement or an environment sampling capability, for example, may determine a distance, an orientation, a speed, motion, or behavior of the predetermined target.

The communication device may exchange a sensing capability parameter in a sensing session establishment process. After sensing session establishment is completed, the communication device may complete sensing measurement setup in a sensing measurement setup process, to perform sensing measurement. However, currently, efficiency of the sensing measurement setup process is low.

## SUMMARY

Embodiments of this application provide a communication method and a communication apparatus, to improve efficiency of a sensing measurement setup process and improve resource utilization.

According to a first aspect, a communication method is provided. The method may be performed by a communication device or a module (for example, a chip) configured in (or used in) a communication device. The following uses an example in which an access point AP performs the method for description.

The method includes: The AP determines a first communication frame, where the first communication frame includes first information, the first information indicates N candidate time periods for sensing measurement, and N is a positive integer; and the AP sends the first communication frame to a station STA.

According to the foregoing solution, the AP and the STA can reach a consensus on a candidate time period in which the STA supports sensing measurement, to improve efficiency of sensing measurement setup and improve resource utilization.

In an implementation 1 of the first aspect, the AP sends the first communication frame to the STA, and the AP receives a second communication frame from the STA, where the second communication frame includes second information, the second information indicates M candidate time periods in the N candidate time periods, the M candidate time periods are time periods in which the STA supports sensing measurement, N is greater than 1, and M is a positive integer less than or equal to N. The AP initiates a sensing measurement instance in one or more of the M candidate time periods.

For example, the first communication frame is a sensing measurement setup request frame, and the second communication frame is a sensing measurement setup response frame.

According to the foregoing solution, when the AP sends the sensing measurement setup request frame to the STA, the AP provides a variable quantity of candidate time periods for the STA in the sensing measurement setup request frame as required. After the STA receives the sensing measurement setup request frame, the STA obtains the N candidate time periods provided by the AP, the STA may determine the M candidate time periods based on the time period in which the STA supports sensing measurement in the N candidate time periods, and notify, based on the sensing measurement setup response frame, the AP of the M candidate time periods in which the STA supports sensing measurement, M may be equal to 1, or M may be greater than 1. In this way, the AP and the STA reach a consensus on the candidate time period in which the STA supports sensing measurement, to improve efficiency of sensing measurement setup and improve resource utilization.

Optionally, when the STA is an associated STA that establishes an association with the AP, N is greater than 1; or when the STA is an unassociated STA that does not establish an association with the AP, N is equal to 1.

According to the foregoing solution, if the AP sends the first communication frame to the associated STA, the first information in the first communication frame may indicate a plurality of candidate time periods; or if the AP sends the first communication frame to the unassociated STA, the first information in the first communication frame may indicate one candidate time period. Before the AP sends the sensing measurement setup request frame to the unassociated STA, the AP receives a sensing measurement setup query frame from the unassociated AP. The sensing measurement setup query frame indicates one or more availability windows for performing sensing measurement by the unassociated STA. If the AP has learned of the candidate time period in which the unassociated STA supports sensing measurement, the AP may select an availability window from availability windows in which the unassociated STA supports sensing measurement, and notify the unassociated STA through the sensing measurement setup request frame. For the associated STA, the AP may determine, through the sensing measurement setup request frame and the sensing establishment response frame, a candidate time period in which the STA supports sensing measurement. For whether the STA establishes an association with the AP, the AP may flexibly adjust a quantity of candidate time periods indicated in the first communication frame, so that a resource waste can be reduced.

Optionally, the first information includes one or more of the following information: a start moment, duration, or a periodicity of each of the N candidate time periods.

Optionally, the second communication frame further includes third information, and the third information indicates that a response status is success.

In an example, the second information is a bit sequence, the bit sequence includes bits corresponding to the N candidate time periods, and a bit corresponding to one candidate time period indicates that the corresponding candidate time period is or is not a time period in which the STA supports sensing measurement.

In another example, the second information includes one or more of the following information: a start moment, duration, or a periodicity of each of the M candidate time periods.

In an implementation 2 of the first aspect, the AP sends the first communication frame to the STA, and the AP receives the second communication frame from the STA, where the second communication frame includes fourth information, the fourth information indicates K candidate time periods, the K candidate time periods are time periods recommended by the STA, and K is a positive integer.

Optionally, the K candidate time periods are time periods that are other than the N candidate time periods and that are indicated by the first information.

According to the foregoing solution, when the STA does not support the N candidate time periods indicated in the first communication frame, or the N candidate time periods indicated in the first communication frame do not meet a requirement of the STA, the STA may send the second communication frame to the AP, and notify the AP of the recommended K candidate time periods, that is, the K candidate time periods are time periods in which the STA supports sensing measurement. In this way, the AP and the STA can reach a consensus on the time period in which the STA supports sensing measurement, to improve efficiency of sensing measurement setup.

Optionally, the second communication frame further includes fifth information, and the fifth information indicates that a response status is rejection carrying a change suggestion.

In an implementation 3 of the first aspect, the AP receives a third communication frame from the STA, where the third communication frame includes sixth information, the sixth information indicates L candidate time periods, and the L candidate time periods are time periods in which the STA supports sensing measurement. The AP sends a first communication frame to the STA, where N candidate time periods indicated by the first information in the first communication frame are N of the L candidate time periods, and L is an integer greater than or equal to N.

For example, the STA is an associated STA that establishes an association with the AP, and the third communication frame is a sensing measurement setup query frame, a probe request frame, an association request frame, or a reassociation request frame.

According to the foregoing solution, the STA may notify, based on the third communication frame, the AP of the one or more candidate time periods in which the STA supports sensing measurement, so that the AP can learn of the candidate time periods in which the STA supports sensing measurement, and select, in a sensing measurement setup process, the time period supported by the STA for sensing measurement. This can improve efficiency of sensing measurement setup and improve resource utilization.

Optionally, the third communication frame is the association request frame or the reassociation request frame. In an example, the sixth information is an indication field in a sensing element in the third communication frame. In another example, the sixth information is a field in a sensing field included in a sensing element in the third communication frame.

In an implementation 4 of the first aspect, the AP receives a fourth communication frame from the STA, where the fourth communication frame includes seventh information, the seventh information indicates P candidate time periods, the P candidate time periods are time periods in which the STA supports sensing measurement, the fourth communication frame is a probe request frame, an association request frame, or a reassociation request frame, and P is a positive integer. The AP receives the sensing measurement setup query frame from the STA, where the L candidate time periods indicated by the sixth information are updated time periods in which the STA supports sensing measurement. The AP sends the first communication frame to the STA.

According to the foregoing solution, after the STA notifies, through the fourth communication frame, the AP of a candidate time period in which the STA supports sensing measurement, if a sensing-related parameter supported by the STA changes before the AP and the STA perform sensing measurement, for example, the candidate time period in which the STA supports sensing measurement changes, the STA may update, through the sensing measurement setup query frame, the sensing-related parameter supported by the STA, for example, update, through the sensing measurement setup query frame, the candidate time period in which the STA supports sensing measurement, so that the sensing-related parameter of the STA that is learned of by the AP in the sensing measurement setup process between the STA and the AP is valid.

Optionally, after the AP sends the first communication frame to the STA, the AP may receive a second communication frame from the STA, where the second communication frame includes third information, and the third information indicates that a status is success. The AP initiates a sensing measurement instance in one or more of the N candidate time periods.

According to a second aspect, a communication method is provided. The method may be performed by a communication device or a module (for example, a chip) configured in (or used in) a communication device. The following uses a station STA as an example for description.

The method includes: The station STA receives a first communication frame from an access point AP, where the first communication frame includes first information, the first information indicates N candidate time periods for sensing measurement, and N is a positive integer; and the STA determines the N candidate time periods based on the first communication frame.

With reference to the second aspect, in some implementations of the second aspect, when the STA is an associated STA that establishes an association with the AP, N is greater than 1; or when the STA is an unassociated STA that does not establish an association with the AP, N is equal to 1.

With reference to the second aspect, in some implementations of the second aspect, the first information includes one or more of the following information: a start moment, duration, or a periodicity of each of the N candidate time periods.

With reference to the second aspect, in some implementations of the second aspect, the method further includes: The STA sends a second communication frame to the AP, where the second communication frame includes second information, the second information indicates M candidate time periods in the N candidate time periods, the M candidate time periods are time periods in which the STA supports sensing measurement, and M is a positive integer less than or equal to N.

With reference to the second aspect, in some implementations of the second aspect, the second communication frame further includes third information, and the third information indicates that a response status is success.

With reference to the second aspect, in some implementations of the second aspect, the second information is a bit sequence, the bit sequence includes bits corresponding to the N candidate time periods, and a bit corresponding to one candidate time period indicates that the corresponding candidate time period is or is not a time period in which the STA supports sensing measurement; or the second information includes one or more of the following information: a start moment, duration, or a periodicity of each of the M candidate time periods.

With reference to the second aspect, in some implementations of the second aspect, the method further includes: The STA sends a second communication frame to the AP, where the second communication frame includes fourth information, the fourth information indicates K candidate time periods, the K candidate time periods are time periods that are other than the N candidate time periods and that are recommended by the STA, and K is a positive integer.

With reference to the second aspect, in some implementations of the second aspect, the second communication frame further includes fifth information, and the fifth information indicates that a response status is rejection carrying a change suggestion.

With reference to the second aspect, in some implementations of the second aspect, the first communication frame is a sensing measurement setup request frame, and the second communication frame is a sensing measurement setup response frame.

With reference to the second aspect, in some implementations of the second aspect, before the STA receives the first communication frame from the AP, the method further includes: The STA sends a third communication frame to the AP. The third communication frame includes sixth information, the sixth information indicates L candidate time periods, and the L candidate time periods are time periods in which the STA supports sensing measurement. The N candidate time periods indicated by the first information in the first communication frame are N of the L candidate time periods, and L is an integer greater than or equal to N.

With reference to the second aspect, in some implementations of the second aspect, the STA is an associated STA that establishes an association with the AP, and the third communication frame is a sensing measurement setup query frame, a probe request frame, an association request frame, or a reassociation request frame.

With reference to the second aspect, in some implementations of the second aspect, the third communication frame is the association request frame or the reassociation request frame. The sixth information is an indication field in a sensing element in the third communication frame; or the sixth information is a field in a sensing field included in a sensing element in the third communication frame.

With reference to the second aspect, in some implementations of the second aspect, the third communication frame is the sensing measurement setup query frame, and that the STA sends the third communication frame to the AP includes: The STA sends a fourth communication frame to the AP, where the fourth communication frame includes seventh information, the seventh information indicates P candidate time periods, the P candidate time periods are time periods in which the STA supports sensing measurement, the fourth communication frame is a probe request frame, an association request frame, or a reassociation request frame, and P is a positive integer; and the STA sends the sensing measurement setup query frame to the AP, where the L candidate time periods indicated by the sixth information are updated time periods in which the STA supports sensing measurement.

With reference to the second aspect, in some implementations of the second aspect, after the STA receives the first communication frame from the AP, the STA may send a second communication frame to the AP, where the second communication frame includes third information, and the third information indicates that a status is success. The STA may respond to the AP in one or more of the N candidate time periods to initiate a sensing measurement instance.

According to a third aspect, a communication apparatus is provided. In a design, the apparatus may include modules that are in one-to-one correspondence with the methods/operations/steps/actions according to any one of the first aspect or the implementations of the first aspect. The module may be implemented by a hardware circuit, software, or a combination of a hardware circuit and software. In a design, the apparatus includes: a processing unit, configured to determine a first communication frame, where the first communication frame includes first information, the first information indicates N candidate time periods for sensing measurement, and N is a positive integer; and a transceiver unit, configured to send the first communication frame to a station STA.

In an implementation 1 of the third aspect, the transceiver unit is further configured to receive a second communication frame from the STA, where the second communication frame includes second information, the second information indicates M candidate time periods in the N candidate time periods, the M candidate time periods are time periods in which the STA supports sensing measurement, N is greater than 1, and M is a positive integer less than or equal to N. The AP initiates a sensing measurement instance in one or more of the M candidate time periods.

In an implementation 2 of the third aspect, the transceiver unit is further configured to receive a second communication frame from the STA, where the second communication frame includes fourth information, the fourth information indicates K candidate time periods, the K candidate time periods are time periods recommended by the STA, and K is a positive integer.

In an implementation 3 of the third aspect, the transceiver unit is further configured to receive a third communication frame from the STA, where the third communication frame includes sixth information, the sixth information indicates L candidate time periods, and the L candidate time periods are time periods in which the STA supports sensing measurement. The N candidate time periods indicated by the first information in the first communication frame are N of the L candidate time periods, and L is an integer greater than or equal to N.

In an implementation 4 of the third aspect, the transceiver unit is further configured to receive a fourth communication frame from the STA, where the fourth communication frame includes seventh information, the seventh information indicates P candidate time periods, the P candidate time periods are time periods in which the STA supports sensing measurement, the fourth communication frame is a probe request frame, an association request frame, or a reassociation request frame, and P is a positive integer. The transceiver unit is further configured to receive a sensing measurement setup query frame from the STA, where the L candidate time periods indicated by the sixth information are updated time periods in which the STA supports sensing measurement.

According to a fourth aspect, a communication apparatus is provided. In a design, the apparatus may include modules that are in one-to-one correspondence with the methods/operations/steps/actions according to any one of the second aspect or the implementations of the second aspect. The module may be implemented by a hardware circuit, software, or a combination of a hardware circuit and software. In a design, the apparatus includes: a transceiver unit, configured to receive a first communication frame from an AP, where the first communication frame includes first information, the first information indicates N candidate time periods for sensing measurement, and N is a positive integer; and a processing unit, configured to determine the N candidate time periods based on the first communication frame.

In an implementation 1 of the fourth aspect, the transceiver unit is further configured to send a second communication frame to the AP, where the second communication frame includes second information, the second information indicates M candidate time periods in the N candidate time periods, the M candidate time periods are time periods in which a STA supports sensing measurement, N is greater than 1, and M is a positive integer less than or equal to N.

Optionally, the processing unit is further configured to respond to the AP to initiate a sensing measurement instance in one or more of the M candidate time periods.

In an implementation 2 of the fourth aspect, the transceiver unit is further configured to send a second communication frame to the AP, where the second communication frame includes fourth information, the fourth information indicates K candidate time periods, the K candidate time periods are time periods recommended by the STA, and K is a positive integer.

Optionally, the K candidate time periods are time periods that are other than the N candidate time periods and that are indicated by the first information.

In an implementation 3 of the fourth aspect, the transceiver unit is further configured to send a third communication frame to the AP, where the third communication frame includes sixth information, the sixth information indicates L candidate time periods, and the L candidate time periods are time periods in which the STA supports sensing measurement. The N candidate time periods indicated by the first information in the first communication frame are N of the L candidate time periods, and L is an integer greater than or equal to N.

In an implementation 4 of the fourth aspect, the transceiver unit is further configured to send a fourth communication frame to the AP, where the fourth communication frame includes seventh information, the seventh information indicates P candidate time periods, the P candidate time periods are time periods in which the STA supports sensing measurement, the fourth communication frame is a probe request frame, an association request frame, or a reassociation request frame, and P is a positive integer. The transceiver unit is further configured to send a sensing measurement setup query frame to the AP, where the L candidate time periods indicated by the sixth information are updated time periods in which the STA supports sensing measurement.

According to a fifth aspect, a communication apparatus is provided, including a processor. The processor may implement the method according to any one of the first aspect and possible implementations of the first aspect, or implement the method according to any one of the second aspect and possible implementations of the second aspect. Optionally, the communication apparatus further includes a memory. The processor is coupled to the memory, and may be configured to execute instructions stored in the memory, to implement the method according to any one of the first aspect and the possible implementations of the first aspect, or implement the method according to any one of the second aspect and the possible implementations of the second aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a communication device (for example, a device having a function of the AP or a device having a function of the STA). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided, and includes an input circuit, an output circuit, and a processing circuit. The processing circuit is configured to receive a signal through the input circuit, and transmit a signal through the output circuit, to enable the processor to perform the method according to any one of the first aspect and the possible implementations of the first aspect, or perform the method according to any one of the second aspect and the possible implementations of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program is run, a computer is enabled to perform the method according to any one of the first aspect and the possible implementations of the first aspect, or to perform the method according to any one of the second aspect and the possible implementations of the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect and the possible implementations of the first aspect, or to perform the method according to any one of the second aspect and the possible implementations of the second aspect.

According to a ninth aspect, a communication system is provided, including the foregoing at least one AP and the foregoing at least one STA. Optionally, the communication system further includes the foregoing at least one STA.

**BRIEF DESCRIPTION OF DRAWINGS**

FIG. 1 is a diagram of an architecture of a communication system according to an embodiment of this application;

FIG. 2 is a schematic flowchart of a communication method according to this application;

FIG. 3 is a diagram of a format of an availability window information subfield according to an embodiment of this application;

FIG. 4 is a diagram of a format of RSTA availability information according to an embodiment of this application;

FIG. 5 is a diagram of a format of an RSTA availability window element according to an embodiment of this application;

FIG. 6 to FIG. 9 are diagrams of different formats of a TB sensing specific subelement including first information according to an embodiment of this application;

FIG. 10 is another schematic flowchart of a communication method according to an embodiment of this application;

FIG. 11 to FIG. 14 are diagrams of different formats of a sensing measurement setup response frame according to an embodiment of this application;

FIG. 15 is a diagram of a format of a TB sensing specific subelement including fourth information according to an embodiment of this application;

FIG. 16 is another schematic flowchart of a communication method according to an embodiment of this application;

FIG. 17 to FIG. 19 are diagrams of different formats of a sensing measurement setup query frame according to an embodiment of this application;

FIG. 20 and FIG. 21 are diagrams of different formats of a sensing element in a sensing measurement setup query frame according to an embodiment of this application;

FIG. 22 is a diagram of a format of a sensing field in a sensing element according to an embodiment of this application;

FIG. 23 is another schematic flowchart of a communication method according to an embodiment of this application;

FIG. 24 is a block diagram of an example of a communication apparatus according to an embodiment of this application; and

FIG. 25 is a diagram of a structure of another example of a communication apparatus according to an embodiment of this application.

## DESCRIPTION OF EMBODIMENTS

The following describes technical solutions of this application with reference to accompanying drawings.

In embodiments of this application, "/" may indicate an "or" relationship between associated objects. For example, A/B may indicate A or B. "and/or" may indicate that there are three relationships between associated objects. For example, A and/or B may indicate the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity and an execution sequence, and the terms such as "first" and "second" do not indicate a definite difference. In embodiments of this application, terms such as "example" or "for example" indicates an example, an illustration, or a description. Any embodiment or design scheme described as an "example" or "for example" should not be explained as being more preferred or having more advantages than another embodiment or design scheme. The terms such as "example" or "for example" are used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

The technical solutions provided in embodiments of this application may be applied to various communication systems such as a wireless local area network (wireless local area network, WLAN) system, for example, wireless fidelity (wireless-fidelity, Wi-Fi). For example, the solutions provided in embodiments of this application may be applied to a wireless local area network system that supports a next-generation Wi-Fi protocol of institute of electrical and electronics engineers (institute of electrical and electronics engineers, IEEE) 802.11ax (for example, 802.11bf, 802.11be, Wi-Fi 8, extremely high throughput (extremely high throughput, EHT), UHR, Wi-Fi AI, or another 802.11 series protocol); and may be further applied to an ultra-wideband (ultra-wideband, UWB)-based wireless personal area network system and a sensing (sensing) system. For another example, an internet of things (internet of things, IoT) system, a narrowband internet of things (narrowband internet of things, NB-IoT) system, a long term evolution (long term evolution, LTE) system, or a 5th generation (5th-generation, 5G) communication system, a new communication system emerging in future communication development, and the like.

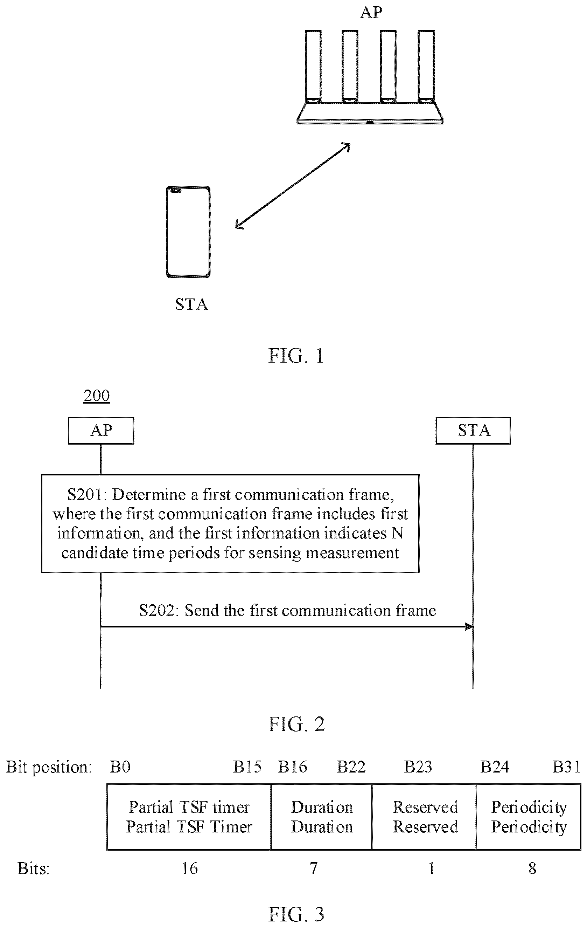

FIG. 1 is a diagram of a communication system 100 according to an embodiment of this application. The communication system 100 includes at least one network device. As shown in FIG. 1, the network device may be an access point (access point, AP). In addition, the communication system 100 may further include at least one terminal. As shown in FIG. 1, the terminal may be a station (station, STA). In the communication system 100, the AP and the STA may complete sensing measurement setup in a sensing measurement setup process, to implement sensing measurement.

For example, the AP may be understood as an access point entity, and the STA may also be understood as a station entity. For example, this application is applicable to a scenario of sensing measurement between an AP and a STA in a WLAN. The AP and the STA may support a WLAN communication protocol, and the communication protocol may include an institute of electrical and electronics engineers (institute of electrical and electronics engineers, IEEE) 802.11 series protocol.

For example, the solution provided in embodiments of this application may be applied to a wireless local area network system that supports 802.11 series protocols, for example, a next-generation Wi-Fi protocol of IEEE 802.11ax like 802.11be, Wi-Fi 7, or EHT, and for another example, a next generation of 802.11be like Wi-Fi 8, UHR, or Wi-Fi AI, and may be further applied to an ultra-wideband UWB-based wireless personal area network system or a sensing system.

The AP provided in this embodiment of this application may be an apparatus having a wireless communication function, supports communication and sensing according to the WLAN protocol, and has a function of communicating with and sensing another device (for example, a STA or another AP) in a WLAN network. Certainly, the AP may further have a function of communicating with and sensing another device. Alternatively, the AP is equivalent to a bridge that connects a wired network and a wireless network. A main function of the AP is to connect wireless network clients together, and then connect the wireless network to the Ethernet. In a WLAN system, the access point may be referred to as an access point station AP STA. The apparatus having the wireless communication function may be an entire device, or may be a chip or a processing system installed in the entire device. A device in which the chip or the processing system is installed may implement the methods and the functions in embodiments of this application under control of the chip or the processing system. The AP in embodiments of this application is an apparatus that provides a service for a STA, and may support the 802.11 series protocols. For example, the access point may be an access point for a terminal device (for example, a mobile phone) to access a wired (or wireless) network, and may be deployed at home, inside a building, or inside a campus, or may be deployed outdoors. For another example, the AP may be a communication entity, for example, a communication server, a router, a switch, or a network bridge, or the AP may include various forms of macro base stations, micro base stations, relay stations, and the like; or the AP may be a chip and a processing system in these various forms of devices, to implement the methods and the functions in embodiments of this application. The access point in this application may be a high-efficiency (high efficient, HE) AP or an extremely high throughput EHT AP, or may be an access point applicable to a future Wi-Fi protocol, or the like.

The STA provided in this embodiment of this application is an apparatus having a wireless communication function, supports communication and sensing according to a WLAN protocol, and has a capability of communicating with and sensing another station or access point in a WLAN network. In the WLAN system, the STA may be referred to as a non-access point station (non-access point station, non-AP STA). For example, the STA may communicate with another device in the WLAN by communicating with and sensing the AP. The apparatus having the wireless communication function may be an entire device, or may be a chip or processing system installed in the entire device. A device in which the chip or the processing system is installed may implement the methods and the functions in embodiments of this application under control of the chip or the processing system. For example, the station may be a wireless communication chip, a wireless sensor, or a wireless communication terminal, and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function.

With continuous evolution of WLAN application scenarios, a WLAN system is applied to more scenarios or industries such as an internet of things industry and an internet of vehicles industry. A device (for example, an AP or a STA) that supports WLAN communication and sensing may be a sensor node (for example, a smart water meter, a smart electricity meter, or a smart air detection node) in a smart city, a smart device (for example, a smart camera, a projector, a display, a TV, a stereo, a refrigerator, and a washing machine) in a smart home, a node and a sensor in the internet of things, an entertainment terminal (for example, an AR, a VR, or another wearable device), a smart device (for example, a printer, a projector, a loudspeaker, and a stereo) in smart office, an infrastructure (for example, a vending machine, a self-service navigation station of a supermarket, a self-service cash register device, and a self-service ordering machine) in a daily life scenario, a device in a large sports and music venue, or the like. Specific forms of the STA and the AP are not limited in embodiments of this application, and are merely examples for description herein.

The STA and the AP may establish a sensing session in an association establishment process. The STA may send an association request frame (association request frame) to the AP, and the STA may send a sensing-related capability parameter of the STA to the AP through the association request frame. After the AP receives the association request frame, the AP may send an association response frame (association response frame) to the STA. If the AP allows association, the association response frame may include a sensing-related capability parameter of the AP, to establish a sensing session, and in this process, an exchange of sensing-related capability parameters between the AP and the STA is completed.

After sensing session establishment is completed, when sensing measurement needs to be performed, a sensing measurement participant node (for example, the participant node may be a STA and/or an AP) may perform a sensing measurement setup process. In the sensing measurement setup process, each participant node may select and negotiate a related parameter based on an application of the sensing measurement. Specifically, a sensing initiator may send a sensing measurement setup request frame (sensing measurement setup request frame) to a sensing responder, to initiate sensing measurement setup and request a role and a related parameter in the sensing measurement. After the sensing responder receives the sensing measurement setup request frame, the sensing responder sends a sensing measurement setup response frame to the sensing initiator.

If the sensing responder accepts a sensing measurement setup parameter (sensing measurement setup parameter) requested by the sensing initiator in the sensing measurement setup request frame, a status code in the sensing measurement setup response frame sent by the sensing responder is set to success, and is denoted as SUCCESS.

If the sensing responder rejects the sensing measurement setup parameter requested by the sensing initiator, but the sensing responder may provide, in the sensing measurement setup response frame, a sensing measurement setup parameter recommended by the sensing responder, a status code in the sensing measurement setup response frame sent by the sensing responder is set to a rejection carrying a change suggestion, and is denoted as REJECTED_WITH_SUGGESTED_CHANGES.

If the sensing responder rejects the sensing measurement setup parameter requested by the sensing initiator, and does not provide a recommended sensing measurement setup parameter, a status code in the sensing measurement setup response frame sent by the sensing responder is set to request rejection, and is denoted as REQUEST_DECLINED.

After sensing measurement setup is completed, the sensing initiator may initiate one or more sensing measurement instances (sensing measurement instance). A sensing measurement instance initiated by the AP as the sensing initiator may be referred to as a trigger-based (trigger-based, TB) sensing measurement instance (TB sensing measurement instance). A sensing measurement instance initiated by the STA as the sensing initiator may be referred to as a non-trigger-based sensing measurement instance (non-TB sensing measurement instance).

When the AP serves as a sensing initiator, in a sensing measurement setup process, because a sensing measurement setup parameter requested by the AP cannot meet a requirement of the STA, the sensing measurement cannot be set up or the sensing measurement cannot be actually performed after the sensing measurement is set up, for example, the STA cannot perform the sensing measurement within sensing time requested by the AP. Consequently, efficiency of sensing measurement setup is low, and a resource waste problem exists. According to the solution provided in this embodiment of this application, the AP and the STA reach a consensus on a candidate time period in which the STA supports sensing measurement, to improve efficiency of sensing measurement setup and improve resource utilization.

The following describes the solutions provided in this application with reference to the accompanying drawings.

FIG. 2 is a schematic flowchart of a communication method according to an embodiment of this application.

S201: An AP determines a first communication frame, where the first communication frame includes first information, the first information indicates N candidate time periods for sensing measurement, and N is a positive integer.

The first information may include one or more of the following information: a start moment, duration, or a periodicity of each of the N candidate time periods. For example, the first information includes N pieces of sub-information, and each piece of sub-information indicates one candidate time period.

In an implementation, a quantity of bits occupied by the first information in the first communication frame varies with a value of the quantity N of candidate time periods determined by the AP. For example, the AP may determine, based on a resource condition, the N candidate time periods and the quantity N of candidate time periods provided for a STA. If the AP determines that the quantity N of candidate time periods is 3, the first information includes three pieces of sub-information; or if the AP determines that the quantity N of candidate time periods is 2, the first information includes two pieces of sub-information. In this case, the AP can flexibly indicate different quantities of candidate time periods as required.

It should be understood that the candidate time period may also be referred to as an availability window for sensing measurement, an availability window for sensing measurement, or another name. In this embodiment of this application, the availability window is mainly used as an example for description. This application is not limited thereto.

For example, the first information may be referred to as a responding STA (responding STA, RSTA) availability window element (denoted as an RSTA availability window element) or an availability window (availability window) field.

For example, the first information is referred to as an RSTA availability window element. The RSTA availability window element may include RSTA availability information (RSTA availability information), and the RSTA availability information may include N availability window information subfields (availability window information subfield). One availability window information subfield indicates a start moment, duration, and a periodicity of one of the N availability windows. For example, FIG. 3 shows a format of an availability window information subfield. As shown in FIG. 3, the availability window information subfield includes partial timing synchronization function (timing synchronization function, TSF) timer (denoted as a Partial TSF Timer) information, duration (duration) information, and periodicity (periodicity) information. The partial TSF timer information is used to determine a start moment of an availability window indicated by the availability window information subfield, the duration information indicates a length of duration of the availability window, and the periodicity information indicates periodicity duration of the availability window, that is, the availability window periodically appears by using the periodicity duration as a periodicity. In this example, a length of the availability window information subfield is 32 bits, that is, 4 bytes. The partial TSF timer information may include 16 bits that may be, for example, located in bit (Bit, B) 0 to B15 of the availability window information subfield. The duration information may include 7 bits that are located in B16 to B22, and the periodicity information may include 8 bits that are located in B24 to B31. Between the duration information and the periodicity information, there may be a reserved bit or a bit used for another purpose. After the AP sends the first communication frame to the STA in S202, the STA may determine, based on the N availability window information subfields in the RSTA availability window element, N availability windows provided by the AP.

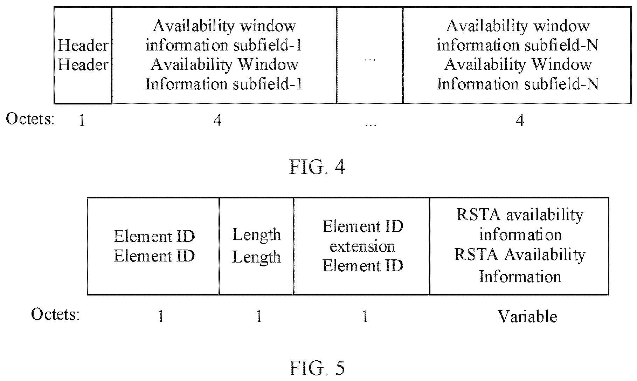

In this example, the RSTA availability information may be shown in FIG. 4. The RSTA availability information includes N availability window information subfields, and a format of each availability window information subfield may be shown in FIG. 3. Availability windows indicated by different availability window information subfields are different in at least one of a start moment, duration, or a periodicity. In addition, the RSTA availability information may further include a 1-byte header (Header).

For example, in addition to the RSTA availability information, the first information (namely, the RSTA availability window element) may further include a 1-byte (Octet) identifier (identifier, ID) of the RSTA availability window element, denoted as Element ID, 1-byte length (Length) information, and 1-byte element ID extension (Element ID Extension) information. For example, the first information may be shown in FIG. 5. With reference to FIG. 4 and FIG. 5, a length of the first information is variable in the first communication frame. When the first information indicates the N availability windows, the length of the first information is (4+4N) bytes, that is, (32+32N) bits. When the first information includes only one availability window information subfield, the length of the first information is a minimum length, that is, 8 bytes or 64 bits.

When the first information is referred to as an availability window (Availability Window) field, the availability window field includes the RSTA availability window element. The N availability windows are indicated by the RSTA availability window element in the availability window field.

It should be understood that, in this embodiment of this application, formats of the frame, the information, the element, the subelement, and the like shown in the accompanying drawings, and an arrangement sequence of sub-information or information in the formats are merely examples provided for better understanding of the solutions of this application. This application is not limited thereto, in specific implementation, and the formats and the arrangement sequence may be determined based on an implementation requirement.

The solution provided in this embodiment of this application may include but is not limited to the following implementation 1 and implementation 2.

Implementation 1: The AP may provide, for the STA based on the first information in the first communication frame, a plurality of candidate time periods for sensing measurement, so that after the STA receives the first communication frame, the STA determines, in the N candidate time periods, a time period in which the STA supports sensing measurement, and feeds back the time period to the AP.

For example, the first communication frame may be a sensing measurement setup request frame. In this way, the STA can determine, in the N candidate time periods, the time period in which the STA supports sensing measurement, that is, an available time period in which the STA performs sensing measurement. According to this solution, efficiency of sensing measurement setup can be improved, a case in which the efficiency of sensing measurement setup is low or the sensing measurement cannot be set up because the sensing measurement time requested by the AP is unavailable to the STA can be reduced, and resource utilization can be improved.

For example, the sensing measurement setup request frame is determined by the AP and sent to the STA. Therefore, the AP is a sensing initiator, and the sensing measurement setup process is a triggered-based (TB) sensing measurement setup process. The sensing measurement setup request frame determined by the AP includes a TB sensing specific subelement (TB sensing specific subelement), and the TB sensing specific subelement includes the first information.

Specifically, the sensing measurement setup request frame may include a sensing measurement parameters element (Sensing Measurement Parameters element), and the TB sensing specific subelement is specifically included in a sensing subelement (Sensing subelement) in the sensing measurement parameters element.

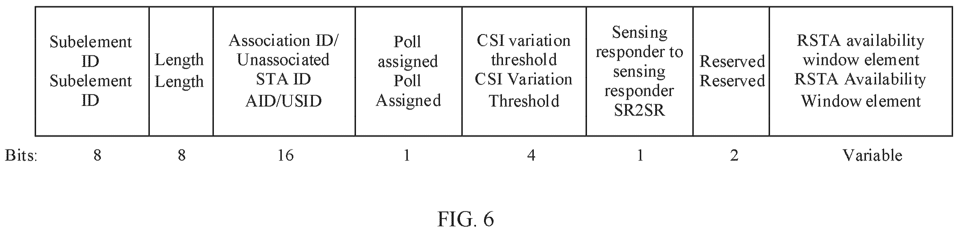

In an example, the first information may be referred to as an RSTA availability window element (RSTA Availability Window element). For example, a format of the TB sensing specific subelement may be shown in FIG. 6. In this example, the first information (namely, the RSTA availability window element) may be the last element in the TB sensing specific subelement, and a quantity of bits occupied by the first information is variable (variable). The RSTA availability window element indicates the N availability windows. A format of the RSTA availability window element may be shown in FIG. 5, or may be another format. The TB sensing specific subelement may further include an 8-bit subelement identifier, namely, a subelement ID, used to determine length (Length) information of the sensing specific subelement. For example, the length information is 8 bits. In addition, the TB sensing specific subelement may further include an association ID (association ID, AID) or an unassociated STA ID (unassociated STA ID, USID), poll assigned (Poll Assigned) information, a channel state information (channel state information, CSI) variation threshold (CSI Variation Threshold), and sensing responder to sensing responder (SR2SR) information. The TB sensing specific subelement may further include 2 reserved bits, or the 2 bits may indicate other information. The 2 bits may be located between the SR2SR information and the RSTA availability window element. However, this application is not limited thereto.

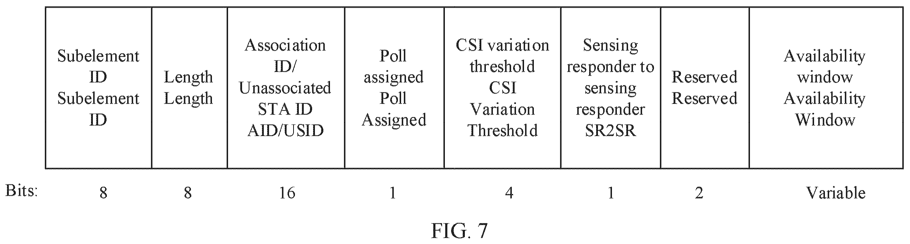

In another example, the first information may be referred to as an availability window (Availability Window) field. For example, a format of the TB sensing specific subelement may be shown in FIG. 7. The availability window field may be the last element in the TB sensing specific subelement, and a quantity of bits occupied by the availability window field is variable (variable). The availability window field may include the RSTA availability window element. The RSTA availability window element indicates the N availability windows. A format of the RSTA availability window element may be shown in FIG. 5, or may be another format. A minimum length of the availability window information may be 8 bytes, that is, 64 bits. However, this application is not limited thereto.

According to the solution of the implementation 1, the AP may provide a variable quantity of candidate time periods for the STA as required, so that the STA can determine, based on the time period in which the STA supports sensing measurement in the N candidate time periods, the candidate time period for the sensing measurement, and notify the AP of the candidate time period. In this way, the AP and the STA can reach a consensus on the candidate time period in which the STA supports sensing measurement, to improve efficiency of sensing measurement setup and improve resource utilization.

Implementation 2: Before S201, the STA sends a third communication frame to the AP, where the third communication frame includes sixth information. The sixth information indicates L candidate time periods. The L candidate time periods are time periods in which the STA supports sensing measurement. In other words, the L candidate time periods are available time periods in which the STA performs sensing measurement. Correspondingly, after the AP receives the third communication frame, the AP determines, in the L candidate time periods, the N candidate time periods for sensing measurement, and notifies the STA through the first communication frame.

For example, the third communication frame is a sensing measurement setup query frame, a probe request frame, an association request frame, or a reassociation request frame.

The STA may notify, based on the third communication frame, the AP of a plurality of availability windows for the STA to perform sensing measurement, and the AP may select one or more availability windows from the plurality of availability windows for the STA to perform sensing measurement with the STA.

In an example, the first communication frame may be a sensing measurement setup request frame. In the sensing measurement setup request frame, a format of the TB sensing specific subelement including the first information may be shown in FIG. 6 or FIG. 7. The first information may be the RSTA availability window element shown in FIG. 5, or the availability window element shown in FIG. 6. The AP selects N availability windows from a plurality of availability windows that can be used by the STA to perform sensing measurement, and notifies the STA of the length of the first information in the sensing measurement setup request frame through the sensing measurement setup request frame, N may be equal to 1, or N may be greater than 1. That is, a quantity of occupied bits is determined based on a quantity N of availability windows selected by the AP. For example, a format of the first information is shown in FIG. 5, and the first information includes a 1-byte element ID, 1-byte length information, and 1-byte element ID extension information, and the RSTA availability information includes a 1-byte header and N availability information subfields. If one availability window information subfield occupies 4 bytes, the length of the first information in the sensing measurement setup request frame is 4+4N bytes, that is, 32+32N bits. After the STA receives the first communication frame, the STA determines that sensing measurement can be performed in the N availability windows indicated by the first information in the first communication frame.

In another example, the AP selects one availability window from a plurality of availability windows that can be used by the STA to perform sensing measurement, and notifies the STA through the first communication frame, that is, N is equal to 1. A length of the first information in the first communication frame is fixed. After the STA receives the first communication frame, the STA determines that sensing measurement can be performed in the availability window indicated by the first information in the first communication frame.

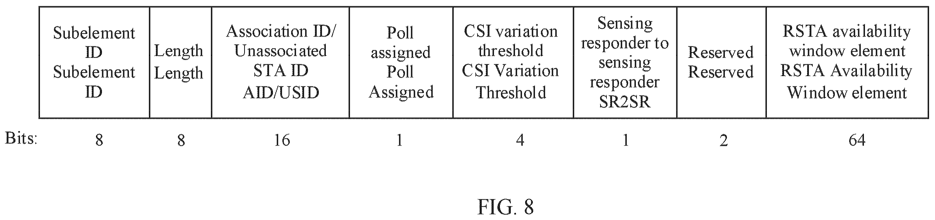

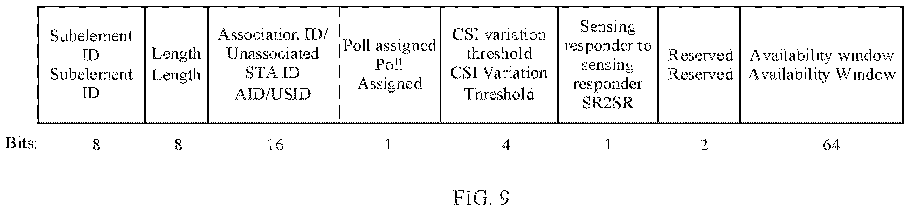

The first communication frame may be a sensing measurement setup request frame. For example, in the sensing measurement setup request frame, a format of a TB sensing specific subelement including the first information may be shown in FIG. 8. The first information is an RSTA availability window element, and the RSTA availability window element indicates only one availability window. For a format of the RSTA availability window element, refer to FIG. 5. However, in this example, a length of the RSTA availability information in the RSTA availability window element is fixed to 5 bytes, that is, the RSTA availability information includes only a 1-byte header and a 4-byte availability window information subfield, and the RSTA availability window element includes 8 bytes in total, that is, 64 bits. Alternatively, in the sensing measurement setup request frame, a format of the TB sensing specific subelement including the first information may be shown in FIG. 9. The first information is availability window information, and the availability window information indicates only one availability window. For example, the availability window information may include 64 bits.

According to the foregoing solution, the STA may notify, based on the third communication frame, the AP of one or more candidate time periods in which the STA supports sensing measurement, so that the AP can learn of the candidate time periods in which the STA supports sensing measurement, select the time period supported by the STA for sensing measurement, and notify the STA through the first communication frame. In this way, the AP and the STA can reach a consensus on the candidate time period in which the STA supports sensing measurement, to improve efficiency of sensing measurement setup and improve resource utilization.

S202: The AP sends the first communication frame to the STA.

Correspondingly, the STA receives the first communication frame from the AP.

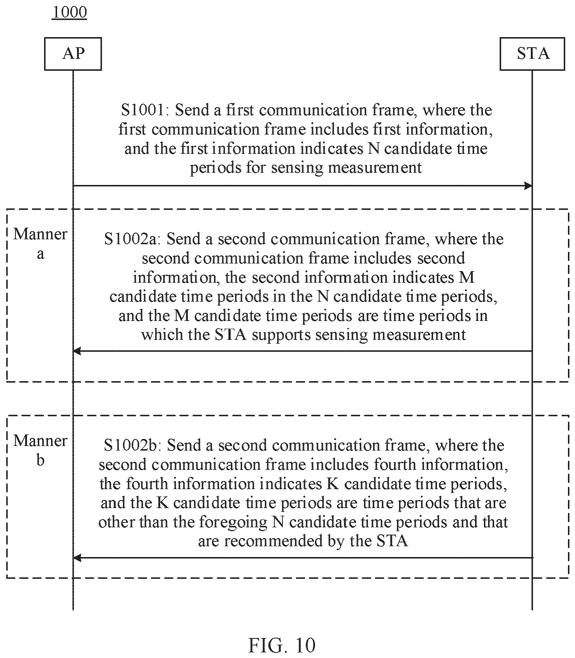

For the foregoing implementation 1, FIG. 10 is a schematic flowchart of the implementation 1. The method 1000 in the implementation 1 shown in FIG. 10 may include but is not limited to the following steps.

S1001: An AP sends a first communication frame to a STA, where the first communication frame includes first information, and the first information indicates N candidate time periods for sensing measurement.

For the first communication frame in S1001, refer to the foregoing descriptions of the embodiment shown in FIG. 2. For brevity, details are not described herein again. After the STA receives the first communication frame from the AP, the STA may send a second communication frame to the AP. Implementations of the second communication frame include but are not limited to the following manner a and manner b.

Manner a: The STA performs S1003a to send a second communication frame to the AP, where the second communication frame includes second information, the second information indicates M candidate time periods in the N candidate time periods, the M candidate time periods are time periods in which the STA supports sensing measurement, and M is a positive integer less than or equal to N.

In the manner a, after the STA obtains, through the first communication frame, the N candidate time periods provided by the AP, the STA determines that the sensing measurement can be performed in the M candidate time periods in the N candidate time periods, in other words, the M candidate time periods in the N candidate time periods are available time periods in which the STA performs sensing measurement. In this case, the STA may send the second communication frame including the second information to the AP. In this way, the AP and the STA reach a consensus on an available time period in which the STA performs sensing measurement, and initiate a sensing measurement instance in the available time period in which the STA performs sensing measurement.

In an example, the second information is a bit sequence, the bit sequence may include bits corresponding to the N candidate time periods, and a bit corresponding to one candidate time period indicates that the corresponding candidate time period is or is not a time period in which the STA supports sensing measurement. M bits corresponding to M candidate time periods in the bit sequence indicate that a corresponding candidate time period is a time period in which the STA supports sensing measurement, and M is equal to 1 or greater than 1.

A length of the bit sequence in the second communication frame is variable, a quantity of bits included in the bit sequence is N, and the N bits one-to-one correspond to N availability windows indicated by the first information in the first communication frame. For example, if a bit in the bit sequence is 1, it indicates that an availability window corresponding to the bit is an availability window in which the STA supports sensing measurement, and if the bit is 0, it indicates that an availability window corresponding to the bit is not an availability window in which the STA supports sensing measurement, M bits in N bits of the bit sequence are 1s. However, this application is not limited thereto.

In another example, M is equal to 1, the second information is a bit sequence, a length of the bit sequence in the second communication frame is variable, the bit sequence includes $\lceil log_2^N \rceil$ bits, and $\lceil X \rceil$ represents rounding up X. A value of the bit sequence corresponds to one of the N candidate time periods. After the AP receives the second communication frame, the AP may determine, based on the value of the bit sequence, a candidate time period in which the STA supports sensing measurement in the N candidate time periods.

For example, the AP indicates three availability windows based on the first information in the first communication frame, that is, N=3, and the three availability windows are sequentially an availability window 0, an availability window 1, and an availability window 2. The second information in the second communication frame sent by the STA includes $\lceil log_2^3 \rceil = 2$ bits. Values of the 2 bits of the second information may respectively correspond to the three availability windows indicated by the first information. For example, when a value of the 2 bits is 00, it indicates that the candidate time period in which the STA supports sensing measurement is the availability window 0. When a value of the 2 bits is 01, it indicates that the candidate time period in which the STA supports sensing measurement is the availability window 1. When a value of the 2 bits is 10, it indicates that the candidate time period in which the STA supports sensing measurement is the availability window 2. However, this application is not limited thereto.

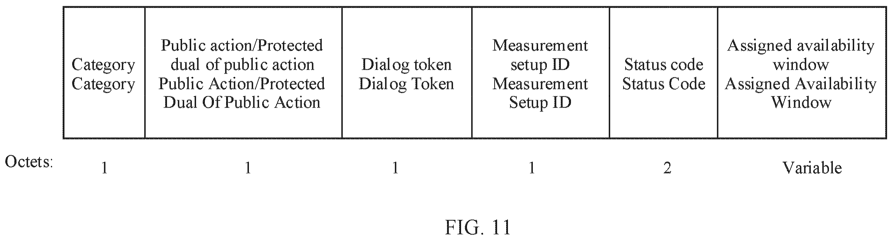

The first communication frame may be a sensing measurement setup request frame, and the second communication frame may be a sensing measurement setup response frame. The sensing measurement setup response frame includes third information, and the third information indicates that a response status of sensing measurement setup is success. For example, the third information may be referred to as status code (Status Code) information, and the status code information indicates that a status is success (SUCCESS). A format of the sensing measurement setup response frame may be shown in FIG. 11. The second information may be a field (field) of the sensing measurement setup response frame, and the field may be referred to as an assigned availability window (Assigned Availability Window) field. The sensing measurement setup response frame may further include 1-byte category (Category) information, 1-byte public function/protected dual of public function (Public Action/Protected Dual Of Public Action) information, a 1-byte dialog token (Dialog Token), and a 1-byte measurement setup ID (Measurement Setup ID).

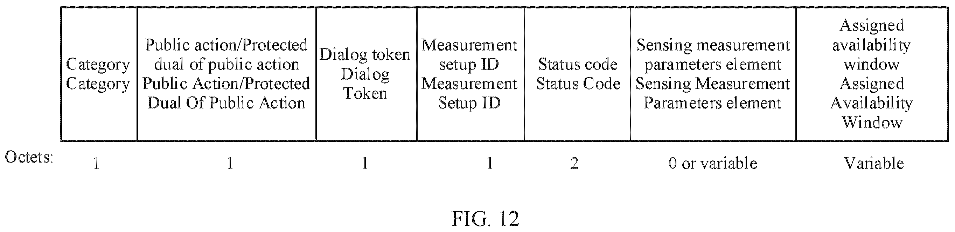

Optionally, the sensing measurement setup response frame may alternatively be shown in FIG. 12. Based on the format shown in FIG. 11, the sensing measurement setup response frame may further include a sensing measurement parameters element (Sensing Measurement Parameters element) indicating an operational parameter related to the sensing measurement instance. For example, the sensing measurement parameters element may be 0 bytes, that is, the element is not included; or the sensing measurement setup response frame includes the sensing measurement parameters element, and a length of the sensing measurement parameters element is variable (variable).

In an optional implementation, the STA in the example shown in FIG. 10 is an associated STA.

For example, in the sensing measurement setup request frame sent by the AP to the associated STA, a format of a TB sensing specific subelement including the first information may be shown in FIG. 6, and a format of the sensing measurement setup response frame sent by the associated STA may be shown in FIG. 11 or FIG. 12. In the sensing measurement setup request frame sent by the AP to an unassociated STA, a format of a TB sensing specific subelement including the first information may be shown in FIG. 8, and a format of the sensing measurement setup response frame sent by the unassociated STA does not include an assigned availability window field. Refer to the frame format shown in FIG. 11 or FIG. 12. The unassociated STA includes a field other than an assigned availability window field.

For another example, in the sensing measurement setup request frame sent by the AP to the associated STA, a format of a TB sensing specific subelement including the first information (for example, the first information may be an RSTA availability window element) may be shown in FIG. 7. A format of the sensing measurement setup response frame sent by the associated STA may be shown in FIG. 11 or FIG. 12. In the sensing measurement setup request frame sent by the AP to the unassociated STA, a format of a TB sensing specific subelement including the first information may be shown in FIG. 9. A format of the sensing measurement setup response frame sent by the unassociated STA does not include an assigned availability window field. Refer to the frame format shown in FIG. 11 or FIG. 12. The unassociated STA includes a field other than the assigned availability window field.

In other words, a length of the first information included in the sensing measurement setup request frame may be 0 or variable. If the sensing measurement setup request frame is sent by the AP to the associated STA, the length of the first information (for example, the first information is the RSTA availability window element or availability window information) in the sensing setup request frame may be variable, the AP provides N candidate time periods (namely, N availability windows) for the associated STA through the sensing setup request frame, and the associated STA selects, from the N availability windows, M availability windows that can be used by the STA to perform sensing measurement, and notifies the AP through the assigned availability window field included in the sensing setup response frame. If the sensing measurement setup request frame is sent by the AP to the unassociated STA, before the AP sends the sensing measurement setup request frame to the unassociated STA, the unassociated STA sends a sensing measurement setup query frame (Sensing Measurement Setup Query frame) to the AP to request to participate in sensing measurement initiated by the AP. The sensing measurement setup query frame indicates one or more availability windows in which the unassociated STA supports sensing measurement. After the AP receives the sensing measurement setup query frame from the unassociated STA, the AP may select an availability window from the availability windows in which the unassociated STA supports sensing measurement, and the unassociated STA is notified through the sensing measurement setup request frame. A length of the first information in the sensing measurement setup request frame is fixed, for example, includes 64 bits, and the 64 bits indicate an availability window selected by the AP.

In another example, the second information includes one or more of the following information: a start moment, duration, or a periodicity of each of the M candidate time periods.

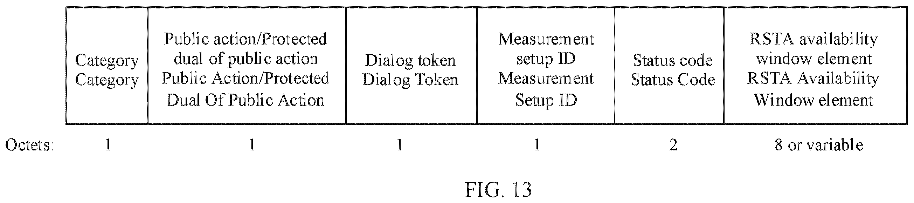

For example, the first communication frame may be a sensing measurement setup request frame, and the second communication frame may be a sensing measurement setup response frame. The sensing measurement setup response frame includes third information. For example, the third information is status code (Status Code) information, and the status code information indicates that a response status is success (SUCCESS). A format of the sensing measurement setup response frame may be shown in FIG. 13. The second information may be a field (field) of the sensing measurement setup response frame, and the field may be referred to as an RSTA availability window element (RSTA Availability Window element). The RSTA availability window element in the sensing measurement setup request frame sent by the AP indicates N availability windows, for example, the RSTA availability window element includes N availability window information subfields. In this case, the STA may determine, in the N availability windows indicated by the N availability window information subfields, M availability windows that can be used by the STA to perform sensing measurement, and notify the AP through the sensing measurement setup response frame. The RSTA availability window element included in the sensing measurement setup response frame includes M availability window information subfields indicating the M availability windows.

In a manner, M is equal to 1, and the RSTA availability window element has a fixed length in the sensing measurement setup response frame, for example, includes 8 bytes, namely, 64 bits. The 64-bit RSTA availability window element indicates one of the N availability windows. The STA notifies, through the RSTA availability window element, the STA of an availability window selected for sensing measurement.

In another manner, M is greater than or equal to 1, a length of the RSTA availability window element in the sensing measurement setup response frame is variable, and the length of the RSTA availability window element is determined based on a quantity M of availability windows that are determined by the STA in the N availability windows and that are for sensing measurement. For example, the length of the RSTA availability window element is 32+32M. The STA notifies, through the RSTA availability window element, the STA of one or more availability windows selected for sensing measurement.

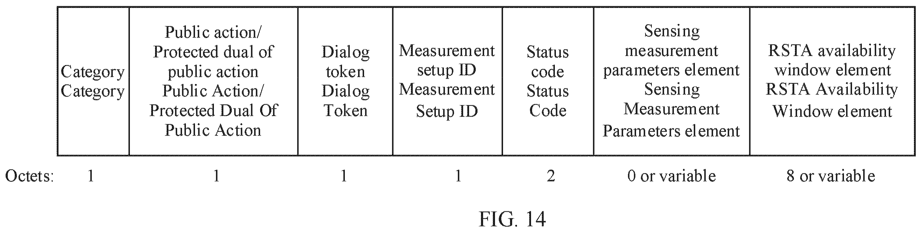

Optionally, the sensing measurement setup response frame may alternatively be shown in FIG. 14. Based on the format shown in FIG. 13, the sensing measurement setup response frame may further include a sensing measurement parameters element (Sensing Measurement Parameters element) indicating an operational parameter related to the sensing measurement instance. For example, the sensing measurement parameters element may be 0 bytes, that is, the element is not included; or the sensing measurement setup response frame includes the sensing measurement parameters element, and a length of the sensing measurement parameters element is variable (variable).

In an optional implementation, the STA in the example shown in FIG. 10 is an associated STA.

For example, in the sensing measurement setup request frame sent by the AP to the associated STA, a format of a TB sensing specific subelement including the first information may be shown in FIG. 6, and a format of the sensing measurement setup response frame sent by the associated STA may be shown in FIG. 13 or FIG. 14. In the sensing measurement setup request frame sent by the AP to an unassociated STA, a format of a TB sensing specific subelement including the first information may be shown in FIG. 8, and the format of the sensing measurement setup response frame sent by the unassociated STA does not include an assigned availability window field. Refer to the frame format shown in FIG. 13 or FIG. 14. The unassociated STA includes a field other than an assigned availability window field.

For another example, in the sensing measurement setup request frame sent by the AP to the associated STA, a format of a TB sensing specific subelement including the first information may be shown in FIG. 7, and a format of the sensing measurement setup response frame sent by the associated STA may be shown in FIG. 13 or FIG. 14. In a format of the sensing measurement setup request frame sent by the AP to the unassociated STA, the TB sensing specific subelement including the first information may be shown in FIG. 9, and the format of the sensing measurement setup response frame sent by the unassociated STA does not include an assigned availability window field. Refer to the frame format shown in FIG. 13 or FIG. 14. The unassociated STA includes a field other than the assigned availability window field.

According to the manner a, the AP may flexibly choose to allocate one or more candidate time periods to the STA as required, so that the STA can select an available time period of the STA to perform sensing measurement. This can improve efficiency of sensing measurement setup and improve resource utilization.

Manner b: The STA performs S 1003b to send a second communication frame to the AP, where the second communication frame includes fourth information, the fourth information indicates K candidate time periods, and the K candidate time periods are time periods that are recommended by the STA and that are for sensing measurement.

Optionally, the K candidate time periods are time periods other than the N candidate time periods.

If the N candidate time periods provided by the AP for the STA based on the first information in the first communication frame are all time periods in which the STA cannot be used for sensing measurement, the STA may send the second communication frame including the fourth information to the AP. A time period that is recommended by the STA and that is for sensing measurement is provided for the AP based on the second information.

For example, the first communication frame is a sensing measurement setup request frame, and the second communication frame is a sensing measurement setup response frame. The sensing measurement setup response frame includes fifth information. For example, the fifth information is status code information, and the status code information indicates that a response status is rejection carrying a change suggestion (REJECTED_WITH_SUGGESTED_CHANGES). The fourth information may be included in the sensing measurement setup response frame.

Specifically, the sensing measurement setup response frame includes a sensing subelement (Sensing element), and the fourth information is included in a TB sensing specific subelement in the sensing subelement.

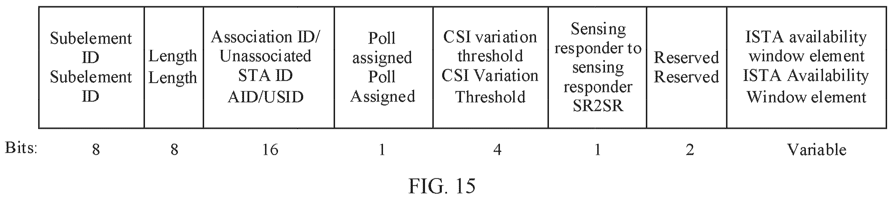

In an example, the fourth information may be referred to as an initiating STA (initiating STA, ISTA) availability window element (ISTA Availability Window element). In the sensing measurement setup response frame, the TB sensing specific subelement including the ISTA availability window element may be shown in FIG. 15. The ISTA availability window element indicates K candidate time periods. For example, the ISTA availability window element may include one ISTA availability information (ISTA availability information) field, the ISTA availability information field includes an availability bitmap (availability bitmap), and the availability bitmap indicates the K candidate time periods. A length of the ISTA availability window element is variable.

In another example, the fourth information may be referred to as an availability window (Availability Window) field. In the sensing measurement setup response frame, a TB sensing specific subelement including the availability window field may be shown in FIG. 7. The sensing subelement includes the availability window field, and the availability window field includes the ISTA availability window element indicating the K candidate time periods. For example, an availability information field in the ISTA availability window element includes an availability bitmap, and the availability bitmap indicates the K candidate time periods. A length of the availability window field is variable.

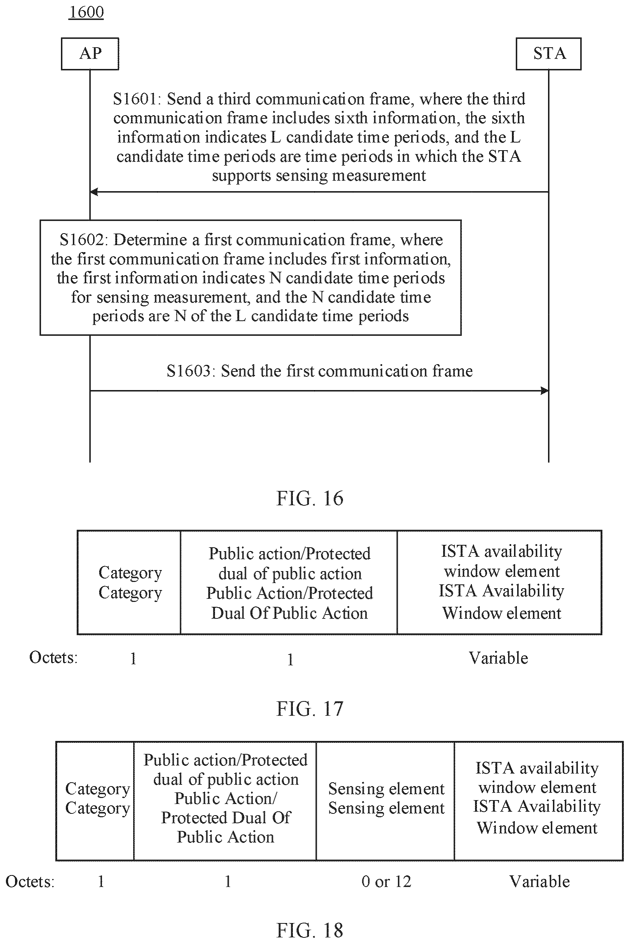

For the implementation 2 in S202, a specific procedure may be shown in FIG. 16. A method 1600 in the implementation 2 shown in FIG. 16 includes but is not limited to the following steps.

S1601: A STA sends a third communication frame to an AP, where the third communication frame includes sixth information, the sixth information indicates L candidate time periods, and the L candidate time periods are time periods in which the STA supports sensing measurement.

L is an integer greater than or equal to 1.

In an implementation, the STA is an associated STA, and the third communication frame is a sensing measurement setup query frame.

In this implementation, after the STA establishes an association with the AP, the STA may notify, based on the sensing measurement setup query frame (Sensing Measurement Setup Query frame), the AP of the L candidate time periods in which the STA supports sensing measurement. In this way, when the AP initiates sensing measurement setup, the AP may select one or more candidate time periods from the L candidate time periods.

In an example, a format of the sensing measurement setup query frame may be shown in FIG. 17. The sixth information may be referred to as an ISTA availability window element (ISTA Availability Window element), and the ISTA availability window element includes an availability bitmap indicating the L candidate time periods. A length of the ISTA availability window field is variable. In addition, the sensing measurement setup query frame further includes 1-byte category information and 1-byte public function/protected dual of public function information. The associated STA has exchanged a sensing-related parameter with the AP in a sensing measurement session establishment process. Therefore, the sensing measurement setup query frame does not carry a sensing element indicating the sensing-related parameter.

Considering an unassociated STA, when the unassociated STA sends the sensing measurement setup query frame, the sensing setup query frame includes an ISTA availability window element and a sensing element, and the sensing element includes a sensing-related parameter of the unassociated STA. For example, the sensing element may be 12 bytes. When the associated STA sends the sensing measurement setup query frame, the sensing setup query frame includes the ISTA availability window element, and the sensing element is 0 bytes, that is, does not include the sensing element. A format of the sensing measurement setup query frame may be represented as shown in FIG. 18, and a sensing element (Sensing element) may be 0 bytes or 12 bytes.

In another example, when the associated STA needs to update the sensing-related parameter, the sensing measurement setup query frame sent by the associated STA to the AP includes an ISTA availability window element and a sensing element, and the ISTA availability window element indicates L availability windows in which the associated STA supports sensing measurement. When the associated STA does not need to update the sensing-related parameter, the sensing measurement setup query frame sent by the associated STA to the AP includes the ISTA availability window element but does not include the sensing element. A format of the sensing measurement setup query frame may be shown in FIG. 18, and a sensing element (Sensing element) may be 0 bytes or 12 bytes.

In still another example, all the sensing measurement setup query frames sent by the associated STA include an ISTA availability window element and a sensing element. For example, all the sensing measurement setup query frames sent by the associated STA or the unassociated STA include an ISTA availability window element and a 12-byte sensing element.

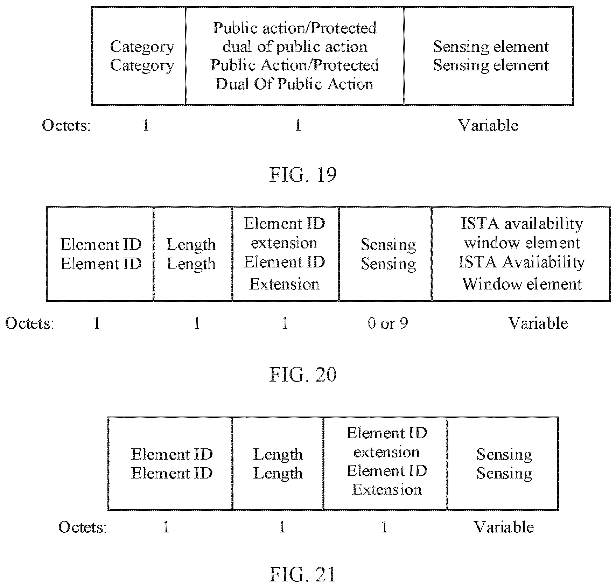

In still another example, the sensing measurement setup query frame may be shown in FIG. 19. The sixth information may be included in the sensing element shown in FIG. 19. For example, the sixth information is an ISTA availability window element, and a format of the sensing element may be shown in FIG. 20. The ISTA availability window element includes an availability bitmap indicating the L candidate time periods. A length of the ISTA availability window field is variable. In addition, the sensing element may further include an element ID, length information, and element ID extension information. The sensing element may not include a sensing (Sensing) field. Alternatively, the sensing element may include a 9-byte sensing field. For example, in the sensing measurement setup query frame in the format shown in FIG. 19 that is sent by the unassociated STA, the sensing element includes an ISTA availability window element and a sensing field, and in the sensing measurement setup query frame in the format shown in FIG. 19 that is sent by the associated STA: The sensing element includes an ISTA availability window element, and does not include a sensing field. Alternatively, the associated STA may determine, based on whether a sensing-related parameter needs to be updated, whether the sensing element includes the sensing field. Alternatively, all sensing elements in the sensing measurement setup query frame sent by the associated STA or the unassociated STA include the sensing field.

In another implementation, the third communication frame is a probe request frame (Probe Request frame), and the sixth information is included in the probe request frame.

When the STA needs to establish an association with the AP in a sensing session establishment process, the STA may first send a probe request frame to probe the AP and a network supported by the AP. The STA may include, in the probe request frame, a candidate time period in which the STA supports sensing measurement. The AP may obtain, from the probe request frame from the STA, a candidate time period in which the STA supports sensing measurement, and select, from the candidate time period, a time period in which the STA performs sensing measurement. For example, the sixth information may be an ISTA availability window element, and the ISTA availability window element indicates the L candidate time periods. A probe request frame body may be shown in Table 1. The ISTA availability window element in the probe request frame may be last allocation+n, where n may be equal to 4 or greater than 4. In addition, the element is optionally present if dot11WLANSensingImplemented (dot11WLANSensingImplemented) is true. Otherwise, the element is not present. dot11WLANSensingImplemented is a capability parameter preconfigured in the STA. If dot11WLANSensingImplemented is true, a case in which the STA supports sensing measurement is defined. This can implement a sensing measurement-related procedure.

Table 1

| Order (Order) | Information (Information) | Notes (Notes) |
|---|---|---|
| <Last allocation+1> | DMG sensing capabilities | The element is defined in a DMG sensing capability element and is optionally present if dot11DMG sensing Msmt implementation (dot11DMGSensingMsmtImplemented) is true. Otherwise, the element is not present. |
| <Last allocation+2> | DMG sensing beam descriptor | The element is defined in a DMG sensing beam descriptor element and is optionally present if dot11DMGSensingMsmtImplemented (dot11DMGSensingMsmtImplemented) is true. Otherwise, the element is not present. |
| <Last allocation+3> | DMG sensing short capabilities | The element is defined in the DMG Sensing Short Capabilities element and is optionally present if dot11DMGSensingMsmtImplemented (dot11DMGSensingMsmtImplemented) is true. Otherwise, the element is not present. |
| ... | ... | ... |
| <Last allocation+n> | ISTA availability window | The element is optionally present if dot11WLANSensingImplemented (dot11WLANSensingImplemented) is true. Otherwise, the element is not present. |

In still another implementation, the third communication frame is an association request frame (Association Request frame) or a reassociation request frame (Reassociation Request frame).

In a sensing session establishment process, the STA sends an association request frame to the AP to notify the AP of a feature and a capability of the STA, where the association request frame includes sensing-related parameters, to join a network and obtain an association identifier (AID). However, the STA has established an association with an AP, and needs to renegotiate some or all parameters with the AP, or the STA needs to establish an association with another AP. In this case, the STA may send a reassociation request frame to a corresponding AP, to renegotiate a parameter or establish an association with another AP. For example, the sixth information may be an ISTA availability window element, and the ISTA availability window element indicates the L candidate time periods.

In an example, the association request frame/reassociation request frame may be shown in Table 2. The sixth information (namely, the ISTA availability window element) may be an element+n that is allocated finally, where n may be equal to 5 or greater than 5. The element is optionally present if dot11WLANSensingImplemented (dot11WLANSensingImplemented) is true. Otherwise, the element is not present. dot11WLANSensingImplemented is a capability parameter preconfigured in the STA.

Table 2

| Order (Order) | Information (Information) | Notes (Notes) |
|---|---|---|
| <Last allocation+1> | Sensing | The element is optionally present if dot11DMGSensingMsmtImplemented (dot11DMGSensingMsmtImplemented) is true. Otherwise, the element is not present. |
| <Last allocation+2> | DMG sensing capabilities | The element is optionally present if dot11DMGSensingMsmtImplemented (dot11DMGSensingMsmtImplemented) is true. Otherwise, the element is not present. |

(continued)

| Order (Order) | Information (Information) | Notes (Notes) |
|---|---|---|
| <Last allocation+3> | DMG sensing beam descriptor | The element is optionally present if dot11DMGSensingMsmtImplemented (dot11DMGSensingMsmtImplemented) is true. Otherwise, the element is not present. |
| <Last allocation+4> | DMG sensing short capabilities | The element is optionally present if dot11DMGSensingMsmtImplemented (dot11DMGSensingMsmtImplemented) is true. Otherwise, the element is not present. |
| ... | ... | ... |
| <Last allocation+n> | ISTA availability window | The element is optionally present if dot11WLANSensingImplemented (dot11WLANSensingImplemented) is true. Otherwise, the element is not present. |

In another example, if the sixth information is included in the sensing element in the association request frame/reassociation request frame, a frame body of the association request frame/reassociation request frame may be shown in Table 3. The sensing element whose order is the last allocation+1 includes the sixth information, that is, the ISTA availability window element.

Table 3

| Order (Order) | Information (Information) | Notes (Notes) |
|---|---|---|
| <Last allocation+1> | Sensing | The element is optionally present if dot11DMGSensingMsmtImplemented (dot11DMGSensingMsmtImplemented) is true. Otherwise, the element is not present. |
| <Last allocation+2> | DMG sensing capabilities | The element is optionally present if dot11DMGSensingMsmtImplemented (dot11DMGSensingMsmtImplemented) is true. Otherwise, the element is not present. |
| <Last allocation+3> | DMG sensing beam descriptor | The element is optionally present if dot11DMGSensingMsmtImplemented (dot11DMGSensingMsmtImplemented) is true. Otherwise, the element is not present. |
| <Last allocation+4> | DMG sensing short capabilities | The element is optionally present if dot11DMGSensingMsmtImplemented (dot11DMGSensingMsmtImplemented) is true. Otherwise, the element is not present. |

The association request frame/reassociation request frame includes a sensing element of an ISTA availability window element, and the sensing element includes a sensing field indicating a sensing-related parameter and an ISTA availability window element indicating L availability windows. For example, a format of the sensing element may be shown in FIG. 20. In this example, a quantity of bytes of the sensing field in the sensing element is 9.

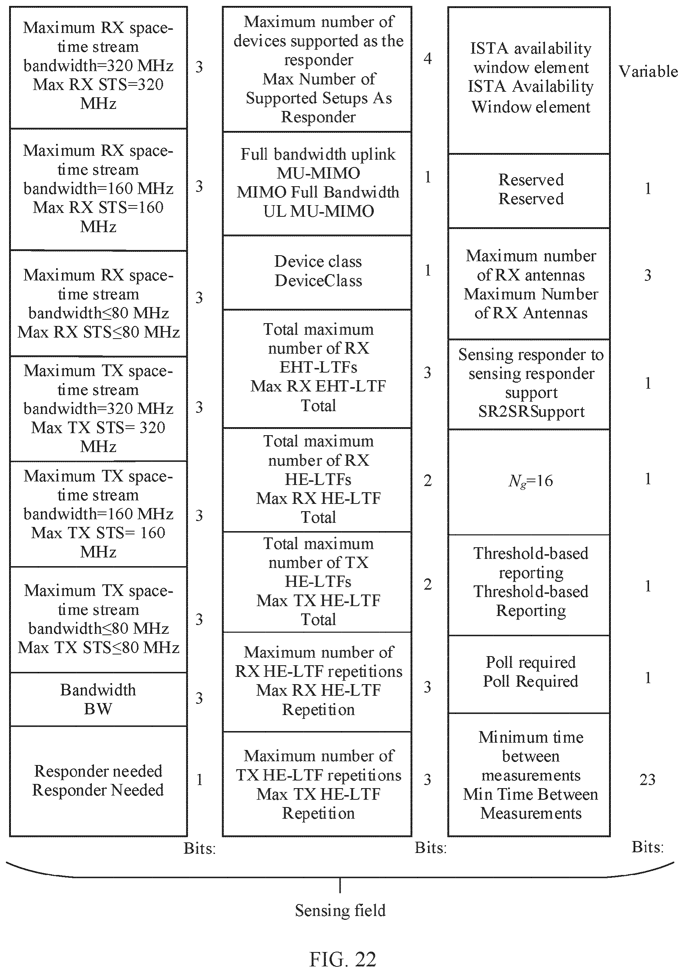

In still another example, the sixth information is included in a sensing field included in a sensing element in the association request frame/reassociation request frame. For example, a format of the sensing element may be shown in FIG. 21. A quantity of bytes of the sensing field in the sensing element is variable. For example, the sensing element includes an ISTA availability window element, and the ISTA availability window element indicates L availability windows. For example, a format of the sensing field may be shown in FIG. 22. A length of the ISTA availability window element is variable, and the STA may determine the length of the ISTA availability window element based on a quantity L of availability windows that needs to be indicated. The sensing element may include other parameters related to a sensing capability of the STA, for example, whether a responder is required, a supported bandwidth, and a maximum quantity of sent spatial-temporal streams (Max TX STS) supported in various bandwidths (for example, the bandwidth is 320 MHz, 160 MHz, and less than or equal to 80 MHz), a maximum number of received spatial-temporal streams (Max RX STS), a maximum number of TX HE-LTF repetitions (Max TX EHT-LTF Repetition), a maximum number of RX HE-LTF repetitions (Max RX EHT-LTF Repetition), a total maximum number of TX HE-LTFs (Max TX EHT-LTF Total), a total maximum number of RX HE-LTFs (Max RX EHT-LTF Total), a device class (Device Class), a full bandwidth uplink MU-MIMO (MIMO Full Bandwidth UL MU-MIMO), a maximum number of devices supported as the responder (Max Number of Supported Setups As Responder), minimum time between measurements (Min Time Between Measurements), poll required (Poll Required), threshold-based reporting (Threshold-based Reporting), sensing responder to sensing responder support (SR2SRSupport), a maximum number of RX antennas (Maximum Number of RX Antennas), and the like.

S1602: The AP sends a first communication frame to the STA, where the first communication frame includes first information, the first information indicates N candidate time periods for sensing measurement, and the N candidate time periods are N of the L candidate time periods.

After the AP receives the third communication frame from the STA in S1601, the AP obtains, through the third communication frame, the L candidate time periods in which the STA supports sensing measurement, and the AP may determine the N candidate time periods in the L candidate time periods, notify, based on the first communication frame, the STA of the N candidate time periods selected by the AP. For example, N is equal to 1, and the AP may select one candidate time period from the L candidate time periods supported by the STA as the time period in which the AP and the STA perform the sensing measurement; or N is greater than 1, and the AP may select a plurality of candidate time periods from the L candidate time periods supported by the STA as the time periods in which the AP and the STA perform sensing measurement. For an implementation of the first communication frame sent by the AP to the STA, refer to the descriptions of the embodiment shown in FIG. 2. For brevity, details are not described herein again.

For example, the first communication frame is a sensing measurement setup request frame. After the AP sends the sensing measurement setup request frame to the STA, the STA may send a sensing measurement setup response frame to the AP. If status code information in the sensing measurement setup response frame indicates that a response status is success, sensing measurement between the AP and the STA is successfully set up. The AP may initiate a sensing measurement instance in one or more of the N candidate time periods indicated by the first information, and the AP and the STA may perform sensing measurement in the one or more candidate time periods.

According to the foregoing solution, the STA may notify the AP of the candidate time period in which the STA supports sensing measurement, so that the AP can select one or more time periods for sensing measurement in the candidate time period in which the STA supports sensing measurement. This can reduce a problem of low efficiency of sensing measurement setup because the sensing measurement time period selected by the AP is unavailable to the STA, improve efficiency of sensing measurement setup, and improve resource utilization.

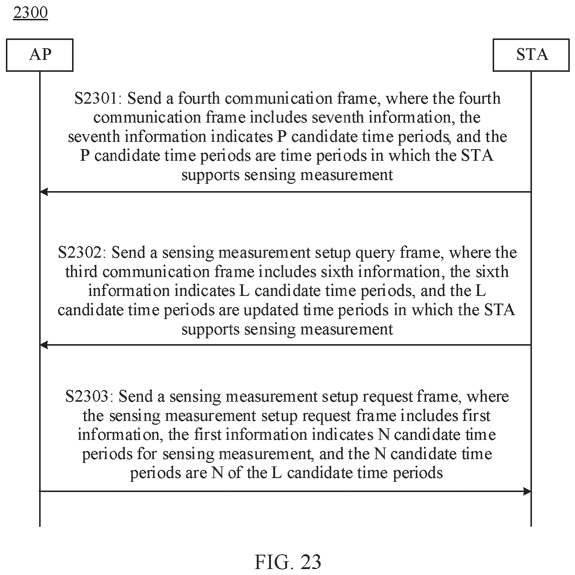

The STA may notify, based on a probe request frame, an association request frame, or a reassociation request frame, the AP of a candidate time period in which the STA supports sensing measurement. Before the AP and the STA perform sensing measurement, a sensing-related parameter supported by the STA may change, for example, the candidate time period in which the STA supports sensing measurement may change. In this case, this application proposes that the STA may update the sensing-related parameter through the sensing measurement setup query frame. In this way, the sensing-related parameter of the STA that is learned by the AP in the sensing measurement setup process between the STA and the AP is valid. FIG. 23 is a schematic flowchart of a communication method 2300 according to an embodiment of this application. The method may include but is not limited to the following steps.

S2301: A STA sends a fourth communication frame to an AP, where the fourth communication frame includes seventh information, the seventh information indicates P candidate time periods, and the P candidate time periods are time periods in which the STA supports sensing measurement.

P is a positive integer. Correspondingly, the AP receives the fourth communication frame from the STA.

For example, the fourth communication frame may be a probe request frame, an association request frame, or a reassociation request frame. When the fourth communication frame may be the probe request frame, the association request frame, or the reassociation request frame, for an implementation, refer to the implementation in which the third communication frame is a probe request frame, an association request frame, or a reassociation request frame. For brevity, details are not described herein again.

S2302: The STA sends a sensing measurement setup query frame to the AP, where the sensing measurement setup query frame includes sixth information, the sixth information indicates L candidate time periods, and the L candidate time periods are updated time periods in which the STA supports sensing measurement.

After the AP receives the fourth communication frame from the STA, the AP may determine the P candidate time periods in which the STA supports sensing measurement. However, before the sensing measurement is set up, a parameter of the STA may change. In this case, the candidate time periods in which the STA supports sensing measurement may also be changed from the P candidate time periods to the L candidate time periods, and the STA may send the sensing measurement setup query frame to the AP. The sensing measurement setup query frame includes the sixth information, and the sixth information indicates the updated L candidate time periods in which the STA supports sensing measurement. For an implementation of the sensing measurement setup query frame including the sixth information, refer to the foregoing implementation in which the third communication frame is the sensing measurement setup query frame. For brevity, details are not described herein again. Correspondingly, the AP receives the sensing measurement setup query frame from the STA, and may determine the updated L candidate time periods in which the STA supports sensing measurement.

S2303: The AP sends a sensing measurement setup request frame to the STA, where the sensing measurement setup request frame includes first information, the first information indicates N candidate time periods for sensing measurement, and the N candidate time periods are N of the L candidate time periods.

When the AP initiates a sensing measurement setup process, the AP may determine the N candidate time periods from the L candidate time periods updated by the STA through the sensing measurement setup query frame, and notify, based on the first information in the sensing measurement setup request frame, the STA of the N candidate time periods selected by the AP, for example, N may be equal to 1, or N may be greater than 1. After the AP sends the sensing measurement setup request frame to the STA, the STA may send a sensing measurement setup response frame to the AP. If status code information in the sensing measurement setup response frame indicates that a response status is success, sensing measurement between the AP and the STA is successfully set up. The AP may initiate a sensing measurement instance in one or more of the N candidate time periods indicated by the first information, and the AP and the STA may perform sensing measurement in the one or more candidate time periods.

According to the foregoing solution, after the STA notifies, through the fourth communication frame, the AP of a candidate time period in which the STA supports sensing measurement, if a sensing-related parameter supported by the STA changes before the AP and the STA perform sensing measurement, for example, the candidate time period in which the STA supports sensing measurement changes, the STA may update, through the sensing measurement setup query frame, the sensing-related parameter supported by the STA, for example, update, through the sensing measurement setup query frame, the candidate time period in which the STA supports sensing measurement, so that the sensing-related parameter of the STA that is learned of by the AP in the sensing measurement setup process between the STA and the AP is valid.

It may be understood that, to implement the functions in the foregoing embodiments, the AP and the STA include corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

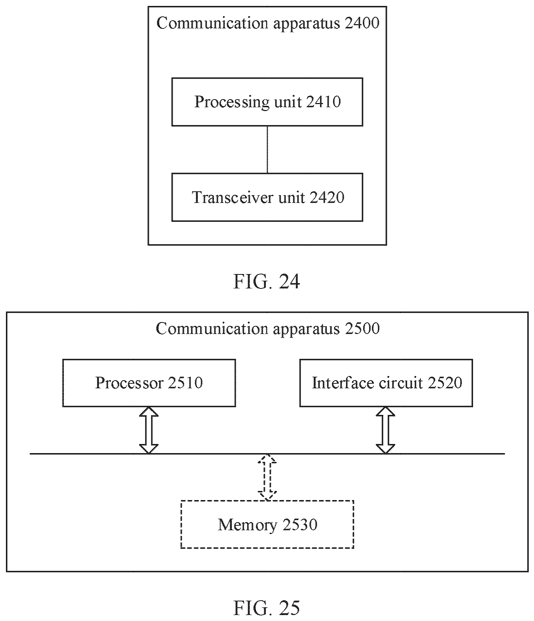

FIG. 24 and FIG. 25 are diagrams of structures of possible communication apparatuses according to embodiments of this application. These communication apparatuses may be configured to implement functions of the STA or the AP in the foregoing method embodiments, and therefore can also implement beneficial effect of the foregoing method embodiments. In this embodiment of this application, the communication apparatus may be the AP shown in FIG. 1, or may be the STA shown in FIG. 1, or may be a module (for example, a chip or a chip system) in a communication device that implements a function of the AP or the STA.

The communication apparatus 1700 includes a transceiver unit 2420. The transceiver unit 2420 may be configured to receive or send information. The communication apparatus 1700 may further include a processing unit 2410. The processing unit 2410 may be configured to process instructions or data, to implement a corresponding operation.

It should be understood that, when the communication apparatus 1700 is a chip configured (or used for) a communication device, the transceiver unit 2420 in the communication apparatus 2400 may be an input/output interface or a circuit of the chip. The processing unit 2410 in the communication apparatus 2400 may be a processor in a chip.

Optionally, the communication apparatus 2400 may further include a storage unit. The storage unit may be configured to store instructions or data. The processing unit 2410 may execute the instructions or the data stored in the storage unit, to enable the communication apparatus to implement a corresponding operation.

The communication apparatus 2400 may be configured to implement a function of the AP or the STA in the method embodiment shown in FIG. 2.

When the communication apparatus 2400 is configured to implement the function of the AP in the method embodiment shown in FIG. 8, the processing unit 2410 is configured to determine a first communication frame, where the first communication frame includes first information, the first information indicates N candidate time periods for sensing measurement, and N is a positive integer. The transceiver unit 2420 is configured to send the first communication frame to a station STA.

When the communication apparatus 2400 is configured to implement the function of the STA in the method embodiment shown in FIG. 8, the transceiver unit 2420 is configured to receive a first communication frame from an AP, where the first communication frame includes first information, the first information indicates N candidate time periods for sensing measurement, and N is a positive integer. The processing unit 2410 is configured to determine the N candidate time periods based on the first communication frame.

The communication apparatus 2400 may be configured to implement a function of the AP or the STA in the method embodiment shown in FIG. 10.

When the communication apparatus 2400 is configured to implement the function of the AP in the method embodiment shown in FIG. 10, the processing unit 2410 is configured to determine a first communication frame, where the first communication frame includes first information, the first information indicates N candidate time periods for sensing measurement, and N is a positive integer. The transceiver unit 2420 is configured to send the first communication frame to a station STA.

In addition, the transceiver unit 2420 is further configured to receive a second communication frame from the STA, where the second communication frame includes second information, the second information indicates M candidate time periods in the N candidate time periods, the M candidate time periods are time periods in which the STA supports sensing measurement, and M is a positive integer less than or equal to N; and/or the transceiver unit 2420 is further configured to receive a second communication frame from the STA, where the second communication frame includes fourth information, the fourth information indicates K candidate time periods, and the K candidate time periods are time periods that are other than the N candidate time periods and that are recommended by the STA.

When the communication apparatus 2400 is configured to implement the function of the STA in the method embodiment shown in FIG. 10, the transceiver unit 2420 is configured to receive a first communication frame from an AP, where the first communication frame includes first information, the first information indicates N candidate time periods for sensing measurement, and N is a positive integer. The processing unit 2410 is configured to determine the N candidate time periods based on the first communication frame.

In addition, the transceiver unit 2420 is further configured to send a second communication frame to the AP, where the second communication frame includes second information, the second information indicates M candidate time periods in the N candidate time periods, the M candidate time periods are time periods in which the STA supports sensing measurement, and M is a positive integer less than or equal to N; and/or the transceiver unit 2420 is further configured to send a second communication frame to the AP, where the second communication frame includes fourth information, the fourth information indicates K candidate time periods, and the K candidate time periods are time periods that are other than the N candidate time periods and that are recommended by the STA.

The communication apparatus 2400 may be configured to implement a function of the AP or the STA in the method embodiment shown in FIG. 16.

When the communication apparatus 2400 is configured to implement the function of the AP in the method embodiment shown in FIG. 16, the transceiver unit 2420 is configured to receive a third communication frame from a STA, where the third communication frame includes sixth information, the sixth information indicates L candidate time periods, and the L candidate time periods are time periods in which the STA supports sensing measurement. L is an integer greater than or equal to N. The processing unit 2410 is configured to determine the L candidate time periods based on the third communication frame. The transceiver unit 2420 is further configured to send a first communication frame to the STA, where the first information in the first communication frame indicates the N candidate time periods in the N candidate time periods.

When the communication apparatus 2400 is configured to implement the function of the STA in the method embodiment shown in FIG. 16, the transceiver unit 2420 is configured to send the third communication frame to the AP. The transceiver unit 2420 is further configured to receive the first communication frame from the AP. The processing unit 2410 is configured to determine, based on the first communication frame, the N candidate time periods selected by the AP from the L candidate time periods.

The communication apparatus 2400 may be configured to implement a function of the AP or the STA in the method embodiment shown in FIG. 23.

When the communication apparatus 2400 is configured to implement the function of the AP in the method embodiment shown in FIG. 23, the transceiver unit 2420 is configured to receive a fourth communication frame from the STA, where the fourth communication frame includes seventh information, the seventh information indicates P candidate time periods, the P candidate time periods are time periods in which the STA supports sensing measurement, the fourth communication frame is a probe request frame, an association request frame, or a reassociation request frame, and P is a positive integer. The transceiver unit 2420 is further configured to receive a sensing measurement setup query frame from the STA, where the L candidate time periods indicated by the sixth information are updated time periods in which the STA supports sensing measurement. The processing unit 2410 is configured to determine, through the sensing measurement setup query frame, the updated time periods in which the STA supports sensing measurement.

When the communication apparatus 2400 is configured to implement the function of the STA in the method embodiment shown in FIG. 23, the processing unit 2410 is configured to determine the updated time periods in which the STA supports sensing measurement. The transceiver unit 2420 is configured to send the fourth communication frame to the AP. The transceiver unit 2420 is further configured to send the sensing measurement setup query frame to the AP.

For more detailed descriptions of the foregoing processing unit 2410 and transceiver unit 2420, refer to related descriptions in the method embodiment shown in FIG. 8.

It should be understood that the transceiver unit 2420 in the communication apparatus 2400 can be implemented through a communication interface (for example, a transceiver, a transceiver circuit, an input/output interface, or a pin). When the communication interface is a transceiver, the transceiver may include a receiver and/or a transmitter. The processing unit 2410 in the communication apparatus 2400 may be implemented by at least one processor. The processing unit 2410 in the communication apparatus 2400 may alternatively be implemented by at least one logic circuit. Optionally, the communication apparatus 2400 further includes a storage unit, and the storage unit may be implemented by using a memory.

As shown in FIG. 25, a communication apparatus 2500 includes a processor 2510 and an interface circuit 2520. The processor 2510 and the interface circuit 2520 are coupled to each other. It may be understood that the interface circuit 2520 may be a transceiver or an input/output interface. Optionally, the communication apparatus 2500 may further include a memory 2530, configured to store instructions executed by the processor 2510, input data required by the processor 2510 to run instructions, or data generated after the processor 2510 runs instructions.

In an implementation, the memory 2530 may alternatively be integrated into the processor 2510, or may be independent of the processor 2510.

When the communication apparatus 2500 is configured to implement the method shown in FIG. 8, the processor 2510 is configured to implement a function of the processing unit 2410, and the interface circuit 2520 is configured to implement a function of the transceiver unit 2420.

When the communication apparatus is a chip of a communication device having a function of the AP, the chip may implement the function of the AP in the foregoing method embodiments. The chip receives information from another module (for example, a radio frequency module or an antenna) in the AP, where the information is sent by the STA to the AP; or the chip sends information to another module (for example, a radio frequency module or an antenna) in the AP, where the information is sent by the AP to the STA.

When the communication apparatus is a chip of a communication device having a function of the STA, the chip may implement the function of the STA in the foregoing method embodiments. The chip receives information from another module (for example, a radio frequency module or an antenna) in the STA, where the information is sent by the AP to the STA; or the chip sends information to another module (for example, a radio frequency module or an antenna) in the STA, where the information is sent by the STA to the AP.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the AP or the STA. The processor and the storage medium may alternatively exist as discrete components in the AP or the STA as discrete components.

According to the methods provided in embodiments of this application, an embodiment of this application further provides a computer program product. The computer program product includes computer program code. When the computer program code is executed by one or more processors, an apparatus including the processor is enabled to perform the methods shown in FIG. 2, FIG. 10, FIG. 16, and FIG. 23.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a communication device having a function of the foregoing AP, a communication device having a function of the foregoing STA, or another programmable apparatus.

According to the methods provided in embodiments of this application, an embodiment of this application further provides a computer-readable storage medium. The computer-readable storage medium stores the foregoing computer programs or the instructions. When the computer programs or the instructions are run by one or more processors, an apparatus including the processor is enabled to perform the methods shown in FIG. 2, FIG. 10, FIG. 16, and FIG. 23.

The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state disk. The computer-readable storage medium may be a volatile or non-volatile storage medium, or may include two types of storage media: a volatile storage medium and a non-volatile storage medium.

According to the method provided in embodiments of this application, an embodiment of this application further provides a communication system, including the foregoing one or more APs. Alternatively, the system may further include one or more of the foregoing STAs.

In several embodiments provided in this application, it should be understood that the disclosed system, apparatus, and method may be implemented in other manners. For example, the described apparatus is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In various embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by an access point AP, a first communication frame, wherein the first communication frame comprises first information, the first information indicates N candidate time periods for sensing measurement, and N is a positive integer; and
   sending, by the AP, the first communication frame to a station STA.

2. The method according to claim 1, wherein the first information comprises one or more of the following information: a start moment, duration, or a periodicity of each of the N candidate time periods.

3. The method according to claim 1 or 2, wherein the method further comprises:

   receiving, by the AP, a second communication frame from the STA, wherein the second communication frame comprises second information, the second information indicates M candidate time periods in the N candidate time periods, the M candidate time periods are time periods in which the STA supports sensing measurement, and M is a positive integer less than or equal to N; and
   initiating, by the AP, a sensing measurement instance in one or more of the M candidate time periods.

4. The method according to claim 3, wherein the second communication frame further comprises third information, and the third information indicates that a response status is success.

5. The method according to claim 3 or 4, wherein

   the second information is a bit sequence, the bit sequence comprises bits corresponding to the N candidate time periods, and a bit corresponding to one candidate time period indicates that the corresponding candidate time period is or is not a time period in which the STA supports sensing measurement; or
   the second information comprises one or more of the following information: a start moment, duration, or a periodicity of each of the M candidate time periods.

**EP 4 661 480 A1**

6. The method according to claim 1 or 2, wherein the method further comprises:
receiving, by the AP, a second communication frame from the STA, wherein the second communication frame comprises fourth information, the fourth information indicates K candidate time periods, the K candidate time periods are time periods that are recommended by the STA and that are for sensing measurement, and K is a positive integer.

7. The method according to claim 6, wherein the second communication frame further comprises fifth information, and the fifth information indicates that a response status is rejection carrying a change suggestion.

8. The method according to any one of claims 3 to 7, wherein the first communication frame is a sensing measurement setup request frame, and the second communication frame is a sensing measurement setup response frame.

9. The method according to claim 1, wherein before determining, by the access point AP, the first communication frame, the method further comprises:
receiving, by the AP, a third communication frame from the STA, wherein the third communication frame comprises sixth information, the sixth information indicates L candidate time periods, the L candidate time periods are time periods in which the STA supports sensing measurement, the N candidate time periods are N of the L candidate time periods, and L is an integer greater than or equal to N.

10. The method according to claim 9, wherein the STA is an associated STA that establishes an association with the AP, and the third communication frame is a sensing measurement setup query frame, a probe request frame, an association request frame, or a reassociation request frame.

11. The method according to claim 9 or 10, wherein the third communication frame is the association request frame or the reassociation request frame, wherein

the sixth information is an indication field in a sensing element in the third communication frame; or
the sixth information is a field in a sensing field comprised in a sensing element in the third communication frame.

12. The method according to claim 9 or 10, wherein the third communication frame is the sensing measurement setup query frame, and the receiving, by the AP, the third communication frame from the STA comprises:

receiving, by the AP, a fourth communication frame from the STA, wherein the fourth communication frame comprises seventh information, the seventh information indicates P candidate time periods, the P candidate time periods are time periods in which the STA supports sensing measurement, the fourth communication frame is a probe request frame, an association request frame, or a reassociation request frame, and P is a positive integer; and
receiving, by the AP, the sensing measurement setup query frame from the STA, wherein the L candidate time periods indicated by the sixth information are updated time periods in which the STA supports sensing measurement.

13. A communication method, comprising:

receiving, by a station STA, a first communication frame from an access point AP, wherein the first communication frame comprises first information, the first information indicates N candidate time periods for sensing measurement, and N is a positive integer; and
determining, by the STA, the N candidate time periods based on the first communication frame.

14. The method according to claim 13, wherein the first information comprises one or more of the following information: a start moment, duration, or a periodicity of each of the N candidate time periods.

15. The method according to claim 13 or 14, wherein the method further comprises:
sending, by the STA, a second communication frame to the AP, wherein the second communication frame comprises second information, the second information indicates M candidate time periods in the N candidate time periods, the M candidate time periods are time periods in which the STA supports sensing measurement, and M is a positive integer less than or equal to N.

16. The method according to claim 15, wherein the second communication frame further comprises third information, and the third information indicates that a response status is success.

17. The method according to claim 15 or 16, wherein

the second information is a bit sequence, the bit sequence comprises bits corresponding to the N candidate time periods, and a bit corresponding to one candidate time period indicates that the corresponding candidate time period is or is not a time period in which the STA supports sensing measurement; or
the second information comprises one or more of the following information: a start moment, duration, or a periodicity of each of the M candidate time periods.

18. The method according to claim 13 or 14, wherein the method further comprises:
sending, by the STA, a second communication frame to the AP, wherein the second communication frame comprises fourth information, the fourth information indicates K candidate time periods, the K candidate time periods are time periods that are recommended by the STA and that are for sensing measurement, and K is a positive integer.

19. The method according to claim 18, wherein the second communication frame further comprises fifth information, and the fifth information indicates that a response status is rejection carrying a change suggestion.

20. The method according to any one of claims 15 to 19, wherein the first communication frame is a sensing measurement setup request frame, and the second communication frame is a sensing measurement setup response frame.

21. The method according to claim 13, wherein before receiving, by the STA, the first communication frame from the AP, the method further comprises:
sending, by the STA, a third communication frame to the AP, wherein the third communication frame comprises sixth information, the sixth information indicates L candidate time periods, the L candidate time periods are time periods in which the STA supports sensing measurement, the N candidate time periods are N of the L candidate time periods, and L is an integer greater than or equal to N.

22. The method according to claim 21, wherein the STA is an associated STA that establishes an association with the AP, and the third communication frame is a sensing measurement setup query frame, a probe request frame, an association request frame, or a reassociation request frame.

23. The method according to claim 21 or 22, wherein the third communication frame is the association request frame or the reassociation request frame, wherein

the sixth information is an indication field in a sensing element in the third communication frame; or
the sixth information is a field in a sensing field comprised in a sensing element in the third communication frame.

24. The method according to claim 21 or 22, wherein the third communication frame is the sensing measurement setup query frame, and the sending, by the STA, the third communication frame to the AP comprises:

sending, by the STA, a fourth communication frame to the AP, wherein the fourth communication frame comprises seventh information, the seventh information indicates P candidate time periods, the P candidate time periods are time periods in which the STA supports sensing measurement, the fourth communication frame is a probe request frame, an association request frame, or a reassociation request frame, and P is a positive integer; and
sending, by the STA, the sensing measurement setup query frame to the AP, wherein the L candidate time periods indicated by the sixth information are updated time periods in which the STA supports sensing measurement.

25. A communication apparatus, wherein the communication apparatus is used in an access point AP, and comprises:

a processing unit, configured to determine a first communication frame, wherein the first communication frame comprises first information, the first information indicates N candidate time periods for sensing measurement, and N is a positive integer; and
a transceiver unit, configured to send the first communication frame to a station STA.

26. The apparatus according to claim 25, wherein the first information comprises one or more of the following information: a start moment, duration, or a periodicity of each of the N candidate time periods.

27. The apparatus according to claim 25 or 26, wherein

the transceiver unit is further configured to receive a second communication frame from the STA, wherein the second communication frame comprises second information, the second information indicates M candidate time periods in the N candidate time periods, the M candidate time periods are time periods in which the STA supports sensing measurement, and M is a positive integer less than or equal to N; and

the processing unit is further configured to initiate a sensing measurement instance in one or more of the M candidate time periods.

28. The apparatus according to claim 27, wherein the second communication frame further comprises third information, and the third information indicates that a response status is success.

29. The apparatus according to claim 27 or 28, wherein

the second information is a bit sequence, the bit sequence comprises bits corresponding to the N candidate time periods, and a bit corresponding to one candidate time period indicates that the corresponding candidate time period is or is not a time period in which the STA supports sensing measurement; or

the second information comprises one or more of the following information: a start moment, duration, or a periodicity of each of the M candidate time periods.

30. The apparatus according to claim 25 or 26, wherein

the transceiver unit is further configured to receive a second communication frame from the STA, wherein the second communication frame comprises fourth information, the fourth information indicates K candidate time periods, the K candidate time periods are time periods that are recommended by the STA and that are for sensing measurement, and K is a positive integer.

31. The apparatus according to claim 30, wherein the second communication frame further comprises fifth information, and the fifth information indicates that a response status is rejection carrying a change suggestion.

32. The apparatus according to any one of claims 27 to 31, wherein the first communication frame is a sensing measurement setup request frame, and the second communication frame is a sensing measurement setup response frame.

33. The apparatus according to claim 25, wherein before the access point AP determines the first communication frame, the transceiver unit is further configured to receive a third communication frame from the STA, wherein the third communication frame comprises sixth information, the sixth information indicates L candidate time periods, the L candidate time periods are time periods in which the STA supports sensing measurement, the N candidate time periods are N of the L candidate time periods, and L is an integer greater than or equal to N.

34. The apparatus according to claim 33, wherein the STA is an associated STA that establishes an association with the AP, and the third communication frame is a sensing measurement setup query frame, a probe request frame, an association request frame, or a reassociation request frame.

35. The apparatus according to claim 33 or 34, wherein the third communication frame is the association request frame or the reassociation request frame, wherein

the sixth information is an indication field in a sensing element in the third communication frame; or

the sixth information is a field in a sensing field comprised in a sensing element in the third communication frame.

36. The apparatus according to claim 33 or 34, wherein the third communication frame is the sensing measurement setup query frame, and the transceiver unit is specifically configured to:

receive a fourth communication frame from the STA, wherein the fourth communication frame comprises seventh information, the seventh information indicates P candidate time periods, the P candidate time periods are time periods in which the STA supports sensing measurement, the fourth communication frame is a probe request frame, an association request frame, or a reassociation request frame, and P is a positive integer; and

receive the sensing measurement setup query frame from the STA, wherein the L candidate time periods indicated by the sixth information are updated time periods in which the STA supports sensing measurement.

37. A communication apparatus, wherein the communication apparatus is used in a station STA, and comprises:

a transceiver unit, configured to receive a first communication frame from an access point AP, wherein the first communication frame comprises first information, the first information indicates N candidate time periods for sensing measurement, and N is a positive integer; and

a processing unit, configured to determine the N candidate time periods based on the first communication frame.

38. The apparatus according to claim 37, wherein the first information comprises one or more of the following information: a start moment, duration, or a periodicity of each of the N candidate time periods.

39. The apparatus according to claim 37 or 38, wherein

the transceiver unit is further configured to send a second communication frame to the AP, wherein the second communication frame comprises second information, the second information indicates M candidate time periods in the N candidate time periods, the M candidate time periods are time periods in which the STA supports sensing measurement, and M is a positive integer less than or equal to N.

40. The apparatus according to claim 39, wherein the second communication frame further comprises third information, and the third information indicates that a response status is success.

41. The apparatus according to claim 39 or 40, wherein

the second information is a bit sequence, the bit sequence comprises bits corresponding to the N candidate time periods, and a bit corresponding to one candidate time period indicates that the corresponding candidate time period is or is not a time period in which the STA supports sensing measurement; or

the second information comprises one or more of the following information: a start moment, duration, or a periodicity of each of the M candidate time periods.

42. The apparatus according to claim 37 or 38, wherein

the transceiver unit is further configured to send a second communication frame to the AP, wherein the second communication frame comprises fourth information, the fourth information indicates K candidate time periods, the K candidate time periods are time periods that are recommended by the STA and that are for sensing measurement, and K is a positive integer.

43. The apparatus according to claim 42, wherein the second communication frame further comprises fifth information, and the fifth information indicates that a response status is rejection carrying a change suggestion.

44. The apparatus according to any one of claims 39 to 43, wherein the first communication frame is a sensing measurement setup request frame, and the second communication frame is a sensing measurement setup response frame.

45. The apparatus according to claim 37, wherein before the STA receives the first communication frame from the AP, the transceiver unit is further configured to send a third communication frame to the AP, wherein the third communication frame comprises sixth information, the sixth information indicates L candidate time periods, the L candidate time periods are time periods in which the STA supports sensing measurement, the N candidate time periods are N of the L candidate time periods, and L is an integer greater than or equal to N.

46. The apparatus according to claim 45, wherein the STA is an associated STA that establishes an association with the AP, and the third communication frame is a sensing measurement setup query frame, a probe request frame, an association request frame, or a reassociation request frame.

47. The apparatus according to claim 45 or 46, wherein the third communication frame is the association request frame or the reassociation request frame, wherein

the sixth information is an indication field in a sensing element in the third communication frame; or
the sixth information is a field in a sensing field comprised in a sensing element in the third communication frame.

48. The apparatus according to claim 45 or 46, wherein the third communication frame is the sensing measurement setup query frame, and the transceiver unit is specifically configured to:

send a fourth communication frame to the AP, wherein the fourth communication frame comprises seventh information, the seventh information indicates P candidate time periods, the P candidate time periods are time periods in which the STA supports sensing measurement, the fourth communication frame is a probe request frame, an association request frame, or a reassociation request frame, and P is a positive integer; and send the sensing measurement setup query frame to the AP, wherein the L candidate time periods indicated by the sixth information are updated time periods in which the STA supports sensing measurement.

49. A communication apparatus, comprising a processor, wherein the processor is configured to execute a computer program stored in a memory, to enable the communication apparatus to perform the method according to any one of claims 1 to 13, or to perform the method according to any one of claims 14 to 26.

50. The apparatus according to claim 49, wherein the processor comprises the memory.

51. A communication apparatus, comprising: a logic circuit and a communication interface, wherein the logic circuit is configured to process to-be-processed information to obtain processed information, and the communication interface is configured to obtain the to-be-processed information and/or output the processed information, to enable the communication apparatus to perform the method according to any one of claims 1 to 13, or to perform the method according to any one of claims 14 to 26.

52. A computer-readable storage medium, wherein the computer-readable storage medium stores a computer program, and when the computer program is run, the method according to any one of claims 1 to 13 or the method according to any one of claims 14 to 26 is implemented.

AP

STA

FIG. 1

200

| AP | | STA |

S201: Determine a first communication frame, where the first communication frame includes first information, and the first information indicates N candidate time periods for sensing measurement

S202: Send the first communication frame

FIG. 2

| Bit position: | B0 | B15 | B16 | B22 | B23 | B24 | B31 |
|---|---|---|---|---|---|---|---|
| | Partial TSF timer Partial TSF Timer | | Duration Duration | | Reserved Reserved | Periodicity Periodicity | |
| Bits: | 16 | | 7 | | 1 | 8 | |

FIG. 3

| Header Header | Availability window information subfield-1 Availability Window Information subfield-1 | ... | Availability window information subfield-N Availability Window Information subfield-N |
|---|---|---|---|

Octets:   1                     4            ...         4

## FIG. 4

| Element ID Element ID | Length Length | Element ID extension Element ID | RSTA availability information RSTA Availability Information |
|---|---|---|---|

Octets:        1            1            1             Variable

## FIG. 5

| Subelement ID Subelement ID | Length Length | Association ID/ Unassociated STA ID AID/USID | Poll assigned Poll Assigned | CSI variation threshold CSI Variation Threshold | Sensing responder to sensing responder SR2SR | Reserved Reserved | RSTA availability window element RSTA Availability Window element |
|---|---|---|---|---|---|---|---|
| Bits: 8 | 8 | 16 | 1 | 4 | 1 | 2 | Variable |

FIG. 6

EP 4 661 480 A1

| Subelement ID Subelement ID | Length Length | Association ID/ Unassociated STA ID AID/USID | Poll assigned Poll Assigned | CSI variation threshold CSI Variation Threshold | Sensing responder to sensing responder SR2SR | Reserved Reserved | Availability window Availability Window |
|---|---|---|---|---|---|---|---|
| Bits: 8 | 8 | 16 | 1 | 4 | 1 | 2 | Variable |

FIG. 7

| Subelement ID Subelement ID | Length Length | Association ID/ Unassociated STA ID AID/USID | Poll assigned Poll Assigned | CSI variation threshold CSI Variation Threshold | Sensing responder to sensing responder SR2SR | Reserved Reserved | RSTA availability window element RSTA Availability Window element |
|---|---|---|---|---|---|---|---|
| 8 | 8 | 16 | 1 | 4 | 1 | 2 | 64 |

Bits:

FIG. 8

| Subelement ID Subelement ID | Length Length | Association ID/ Unassociated STA ID AID/USID | Poll assigned Poll Assigned | CSI variation threshold CSI Variation Threshold | Sensing responder to sensing responder SR2SR | Reserved Reserved | Availability window Availability Window |
|---|---|---|---|---|---|---|---|
| Bits: 8 | 8 | 16 | 1 | 4 | 1 | 2 | 64 |

FIG. 9

<u>1000</u>

| AP | | STA |

S1001: Send a first communication frame, where the first communication frame includes first information, and the first information indicates N candidate time periods for sensing measurement

Manner a

S1002a: Send a second communication frame, where the second communication frame includes second information, the second information indicates M candidate time periods in the N candidate time periods, and the M candidate time periods are time periods in which the STA supports sensing measurement

Manner b

S1002b: Send a second communication frame, where the second communication frame includes fourth information, the fourth information indicates K candidate time periods, and the K candidate time periods are time periods that are other than the foregoing N candidate time periods and that are recommended by the STA

FIG. 10

| Category Category | Public action/Protected dual of public action Public Action/Protected Dual Of Public Action | Dialog token Dialog Token | Measurement setup ID Measurement Setup ID | Status code Status Code | Assigned availability window Assigned Availability Window |
|---|---|---|---|---|---|
| Octets: 1 | 1 | 1 | 1 | 2 | Variable |

FIG. 11

| Category Category | Public action/Protected dual of public action Public Action/Protected Dual Of Public Action | Dialog token Dialog Token | Measurement setup ID Measurement Setup ID | Status code Status Code | Sensing measurement parameters element Sensing Measurement Parameters element | Assigned availability window Assigned Availability Window |
|---|---|---|---|---|---|---|
| 1 | 1 | 1 | 1 | 2 | 0 or variable | Variable |

Octets:

FIG. 12

EP 4 661 480 A1

| Category Category | Public action/Protected dual of public action Public Action/Protected Dual Of Public Action | Dialog token Dialog Token | Measurement setup ID Measurement Setup ID | Status code Status Code | RSTA availability window element RSTA Availability Window element |
|---|---|---|---|---|---|
| Octets: 1 | 1 | 1 | 1 | 2 | 8 or variable |

FIG. 13

| Category Category | Public action/ Protected dual of public action Public Action/ Protected Dual Of Public Action | Dialog token Dialog Token | Measurement setup ID Measurement Setup ID | Status code Status Code | Sensing measurement parameters element Sensing Measurement Parameters element | RSTA availability window element RSTA Availability Window element |
|---|---|---|---|---|---|---|
| Octets: 1 | 1 | 1 | 1 | 2 | 0 or variable | 8 or variable |

FIG. 14

| Subelement ID Subelement ID | Length Length | Association ID/ Unassociated STA ID AID/USID | Poll assigned Poll Assigned | CSI variation threshold CSI Variation Threshold | Sensing responder to sensing responder SR2SR | Reserved Reserved | ISTA availability window element ISTA Availability Window element |
|---|---|---|---|---|---|---|---|
| Bits: 8 | 8 | 16 | 1 | 4 | 1 | 2 | Variable |

FIG. 15

1600

```
┌────┐                                                              ┌─────┐
│ AP │                                                              │ STA │
└────┘                                                              └─────┘
  │                                                                    │
  │    S1601: Send a third communication frame, where the third        │
  │    communication frame includes sixth information, the sixth        │
  │◄── information indicates L candidate time periods, and the L ──────┤
  │    candidate time periods are time periods in which the STA         │
  │    supports sensing measurement                                     │
```

S1602: Determine a first communication frame, where the first communication frame includes first information, the first information indicates N candidate time periods for sensing measurement, and the N candidate time periods are N of the L candidate time periods

S1603: Send the first communication frame

FIG. 16

| | Category<br>Category | Public action/Protected<br>dual of public action<br>Public Action/Protected<br>Dual Of Public Action | ISTA availability<br>window element<br>ISTA Availability<br>Window element |
|---|---|---|---|
| Octets: | 1 | 1 | Variable |

FIG. 17

| | Category<br>Category | Public action/Protected<br>dual of public action<br>Public Action/<br>Protected Dual Of<br>Public Action | Sensing element<br>Sensing element | ISTA availability<br>window element<br>ISTA Availability<br>Window element |
|---|---|---|---|---|
| Octets: | 1 | 1 | 0 or 12 | Variable |

FIG. 18

| Category Category | Public action/Protected dual of public action Public Action/Protected Dual Of Public Action | Sensing element Sensing element |
|---|---|---|

Octets:      1                      1                   Variable

## FIG. 19

| Element ID Element ID | Length Length | Element ID extension Element ID Extension | Sensing Sensing | ISTA availability window element ISTA Availability Window element |
|---|---|---|---|---|

Octets:    1            1            1         0 or 9       Variable

## FIG. 20

| Element ID Element ID | Length Length | Element ID extension Element ID Extension | Sensing Sensing |
|---|---|---|---|

Octets:    1             1            1        Variable

## FIG. 21

| | Bits: |
|---|---|
| Maximum RX space-time stream bandwidth=320 MHz Max RX STS=320 MHz | 3 |
| Maximum RX space-time stream bandwidth=160 MHz Max RX STS=160 MHz | 3 |
| Maximum RX space-time stream bandwidth≤80 MHz Max RX STS≤80 MHz | 3 |
| Maximum TX space-time stream bandwidth=320 MHz Max TX STS= 320 MHz | 3 |
| Maximum TX space-time stream bandwidth=160 MHz Max TX STS= 160 MHz | 3 |
| Maximum TX space-time stream bandwidth≤80 MHz Max TX STS≤80 MHz | 3 |
| Bandwidth BW | 3 |
| Responder needed Responder Needed | 1 |

| | Bits: |
|---|---|
| Maximum number of devices supported as the responder Max Number of Supported Setups As Responder | 4 |
| Full bandwidth uplink MU-MIMO MIMO Full Bandwidth UL MU-MIMO | 1 |
| Device class DeviceClass | 1 |
| Total maximum number of RX EHT-LTFs Max RX EHT-LTF Total | 3 |
| Total maximum number of RX HE-LTFs Max RX HE-LTF Total | 2 |
| Total maximum number of TX HE-LTFs Max TX HE-LTF Total | 2 |
| Maximum number of RX HE-LTF repetitions Max RX HE-LTF Repetition | 3 |
| Maximum number of TX HE-LTF repetitions Max TX HE-LTF Repetition | 3 |

| | Bits: |
|---|---|
| ISTA availability window element ISTA Availability Window element | Variable |
| Reserved Reserved | 1 |
| Maximum number of RX antennas Maximum Number of RX Antennas | 3 |
| Sensing responder to sensing responder support SR2SRSupport | 1 |
| $N_g$=16 | 1 |
| Threshold-based reporting Threshold-based Reporting | 1 |
| Poll required Poll Required | 1 |
| Minimum time between measurements Min Time Between Measurements | 23 |

Sensing field

FIG. 22

2300

```
┌─────┐                                                              ┌─────┐
│ AP  │                                                              │ STA │
└─────┘                                                              └─────┘
   │                                                                    │
   │      S2301: Send a fourth communication frame, where the fourth    │
   │           communication frame includes seventh information, the    │
   │      seventh information indicates P candidate time periods, and the│
   │      P candidate time periods are time periods in which the STA     │
   │<───────────────── supports sensing measurement ───────────────────│
   │                                                                    │
   │                                                                    │
   │      S2302: Send a sensing measurement setup query frame, where the │
   │      third communication frame includes sixth information, the sixth│
   │          information indicates L candidate time periods, and the L  │
   │      candidate time periods are updated time periods in which the STA│
   │<───────────────── supports sensing measurement ───────────────────│
   │                                                                    │
   │                                                                    │
   │      S2303: Send a sensing measurement setup request frame, where   │
   │      the sensing measurement setup request frame includes first     │
   │      information, the first information indicates N candidate time   │
   │      periods for sensing measurement, and the N candidate time      │
   │────────── periods are N of the L candidate time periods ──────────>│
   │                                                                    │
```

FIG. 23

Communication apparatus 2400

Processing unit 2410

Transceiver unit 2420

FIG. 24

Communication apparatus 2500

Processor 2510

Interface circuit 2520

Memory 2530

FIG. 25

## INTERNATIONAL SEARCH REPORT

| International application No. |
| --- |
| **PCT/CN2024/079471** |

### A. CLASSIFICATION OF SUBJECT MATTER

H04W24/10(2009.01)i; H04W72/04(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

IEEE, CNTXT, ENTXTC, VEN: 感知, 测量, 时间, 时间窗, 可用窗, 时隙, 多个, 候选, 待选, 能力, 协商, 支持, sensing, measurement, time, window, slot, service period, sp, multiple, capacity, support

### C. DOCUMENTS CONSIDERED TO BE RELEVANT

| Category* | Citation of document, with indication, where appropriate, of the relevant passages | Relevant to claim No. |
| --- | --- | --- |
| X | WO 2019032148 A1 (INTEL IP CORP.) 14 February 2019 (2019-02-14) description, paragraphs 68-112 | 1-2, 13-14, 25-26, 37-38, 49-52 |
| A | CN 113747461 A (HUAWEI TECHNOLOGIES CO., LTD.) 03 December 2021 (2021-12-03) entire document | 1-52 |
| A | CN 114731679 A (BEIJING XIAOMI MOBILE SOFTWARE CO., LTD.) 08 July 2022 (2022-07-08) entire document | 1-52 |
| A | CN 115474224 A (CHENGDU XGIMI TECHNOLOGY CO., LTD.) 13 December 2022 (2022-12-13) entire document | 1-52 |
| A | WO 2023001243 A1 (VIVO MOBILE COMMUNICATION CO., LTD.) 26 January 2023 (2023-01-26) entire document | 1-52 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 April 2024** | **09 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/079471**

| Patent document cited in search report | | | Publication date (day/month/year) | Patent family member(s) | | | Publication date (day/month/year) |
|---|---|---|---|---|---|---|---|
| WO | 2019032148 | A1 | 14 February 2019 | None | | | |
| CN | 113747461 | A | 03 December 2021 | WO | 2021244353 | A1 | 09 December 2021 |
| | | | | EP | 4156556 | A1 | 29 March 2023 |
| | | | | EP | 4156556 | A4 | 08 November 2023 |
| CN | 114731679 | A | 08 July 2022 | CN | 114731679 | B | 18 August 2023 |
| | | | | WO | 2023159612 | A1 | 31 August 2023 |
| CN | 115474224 | A | 13 December 2022 | None | | | |
| WO | 2023001243 | A1 | 26 January 2023 | CN | 115696370 | A | 03 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310244980